# EUROPEAN PATENT SPECIFICATION

(11) **EP 4 140 789 B1**
(45) Date of publication and mention of the grant of the patent: **13.03.2024**
(21) Application number: 22191619.0
(22) Date of filing: 23.08.2022
(51) Int. Cl.: B60K 1/00, B60K 1/02, B60K 17/02, B60K 7/00, B60K 25/00

(54) **AUTOMOTIVE PROPULSION SYSTEM AND AUTOMOBILE**
KRAFTFAHRZEUGANTRIEBSSYSTEM UND KRAFTFAHRZEUG
SYSTÈME DE PROPULSION AUTOMOBILE ET AUTOMOBILE

(30) Priority: 25.08.2021 CN 202110979029
(43) Date of publication of application: 01.03.2023
(73) Proprietor: Huawei Digital Power Technologies Co., Ltd., Shenzhen, 518043 (CN)
(72) Inventor: TANG, Zhengyi, Shenzhen, 518129 (CN); MA, Wenwu, Shenzhen, 518129 (CN); WEI, Jingzhou, Shenzhen, 518129 (CN)
(74) Representative: Thun, Clemens

(56) References cited:
- WO-A1-2021/093305
- FR-A1- 3 043 362
- US-A1- 2011 259 657
- US-A1- 2021 107 456

## Description

### TECHNICAL FIELD

This application relates to the automotive field, and more specifically, to an automotive propulsion system and an automobile in the automotive field.

### BACKGROUND

Development of new energy vehicles represented by electric vehicles is an important measure for energy saving, emission reduction, and pollution prevention. This has become a common consensus among all countries in the world. For better driving experience, four-drive electric vehicles are increasingly popular. However, the four-drive electric vehicles are not fully powered under all road conditions. Only front-drive systems or rear-drive systems need to be activated under some road conditions. In this case, there may be a reverse drag phenomenon in motors in non-activated propulsion systems, causing additional energy losses. In addition, to implement cooling or heating, compressors and motors serving the compressors need to be installed in automobiles, which increases automobile weights and energy losses.

The FR3043362A1 relates to a powertrain of a vehicle, whereas the powertrain comprises first and second accessories secured to the casing of the geared motor system, and which are respectively driven independently of each other by the first and second electric motors.

### SUMMARY

This application provides an automotive propulsion system as defined by claim 1. Both a compressor and a first retarder are connected to a first motor, so that the compressor and the first retarder can share a same power source. This can reduce a weight and costs of the automobile, and improve use efficiency of the motor to save energy. A first disconnector is disposed to implement a connection or disconnection between the first motor and the first retarder, and a second disconnector is disposed to implement a connection or disconnection between the first motor and the compressor. This can implement independent operation of the first retarder and the compressor. In addition, when a first propulsion system does not provide power, the first disconnector is opened, to prevent the first motor in the first propulsion system from being reversely dragged. This reduces an energy loss.

According to a first aspect, an automotive propulsion system is provided, including a first propulsion system and a second propulsion system.

The first propulsion system includes: a first motor, a first retarder, a first disconnector, a compressor, and a second disconnector. The first disconnector is disposed in the first retarder, and is configured to implement a connection or disconnection between the first motor and the first retarder. The second disconnector is disposed between the first retarder and the compressor, and is configured to implement a connection or disconnection between the first motor and the compressor.

The second propulsion system includes: a second motor and a second retarder. The second motor is connected to the second retarder.

In the automotive propulsion system provided in this embodiment of this application, the first motor, the first retarder, and the compressor are disposed in the first propulsion system. Both the compressor and the first retarder are connected to the first motor, and may share the first motor (or a power source). This saves a motor specifically used for the compressor, reduces a weight and costs of an automobile, and helps improve use efficiency of the motor, to save energy. The first disconnector is configured for the first retarder and the second disconnector is configured for the compressor. Closing or opening of the first disconnector and closing or opening of the second disconnector are controlled, so that the first retarder and the compressor can independently operate, and do not affect each other. The first disconnector is configured for the first retarder. Therefore, when the first propulsion system does not provide power, the first disconnector can be opened to disconnect the first motor from the first retarder, to disconnect the first motor from a wheel connected to the first retarder. This can prevent the wheel from reversely dragging the first motor during traveling of the automobile, reduce an energy loss caused by reverse drag of the motor, and increase a driving range.

Optionally, the second propulsion system further includes a third disconnector, configured to implement a connection or disconnection between the second motor and the second retarder. The third disconnector is disposed between the second motor and the second retarder, or in the second retarder.

In the automotive propulsion system provided in this embodiment of this application, the third disconnector is disposed in the second propulsion system, to implement a connection or disconnection between the second motor and the second retarder. In this case, when the second propulsion system does not provide power, the third disconnector can be opened to disconnect the second motor from the second retarder, to disconnect the second motor from a wheel connected to the second retarder. This can prevent the wheel from reversely dragging the second motor during traveling of the automobile, reduce the energy loss caused by the reverse drag of the motor, and increase the driving range. In addition, a disconnector is disposed in each of the first propulsion system and the second propulsion system. When the automobile breaks down, two disconnectors are opened, to facilitate towing away the automobile.

Optionally, the third disconnector is disposed between the second motor and the second retarder.

The second retarder includes a first transmission member. The first transmission member is connected to the second motor. The third disconnector is disposed between the first transmission member and the second motor.

Optionally, the third disconnector is disposed in the second retarder.

The second retarder includes a first transmission member and a second transmission member. The second transmission member is connected to the second motor by using the first transmission member. The third disconnector is disposed between the first transmission member and the second transmission member.

Optionally, the third disconnector is disposed in the second retarder.

The second retarder includes a first differential. The first differential is connected to the second motor, and the third disconnector is disposed on the first differential.

In the automotive propulsion system provided in this embodiment of this application, the third disconnector is disposed on the first differential in the second retarder. Because the first differential is close to the wheel and far away from the second motor, a loss caused by the reverse drag can be further reduced when the second motor does not work.

According to the invention, the first retarder includes a third transmission member and a fourth transmission member. The fourth transmission member is connected to the first motor by using the third transmission member. The first disconnector is disposed between the third transmission member and the fourth transmission member.

Optionally, the first retarder includes a second differential. The second differential is connected to the first motor, and the first disconnector is disposed on the second differential.

In the automotive propulsion system provided in this embodiment of this application, the first disconnector is disposed on the second differential in the first retarder. Because the second differential is close to the wheel and is away from the first motor, a loss caused by the reverse drag can be further reduced when the first motor does not work.

According to the invention, the first retarder includes a third transmission member. The third transmission member is connected to the first motor. The second disconnector is disposed between the third transmission member and the compressor.

Optionally, the automotive propulsion system further includes a controller. The controller is configured to control the automotive propulsion system to execute a first propulsion mode, a second propulsion mode, or a third propulsion mode.

The first propulsion mode: The first motor is in a working state, the first disconnector connects the first motor to the first retarder, and torque of the first motor is transmitted by using the first retarder. The second motor is in the working state, the third disconnector connects the second motor to the second retarder, and torque of the second connects the second motor to the second retarder, torque of the second motor is transmitted by using the second retarder. The third motor is in the working state, the fourth disconnector connects the third motor to the third retarder, and torque of the third motor is transmitted by using the third retarder.

Optionally, the automotive propulsion system further includes a controller. The controller is configured to control starting of the first motor and closing of the second disconnector, so that the torque of the first motor is transmitted to the compressor, or the controller is configured to control opening of the second disconnector.

According to a second aspect, which is not covered by the claims, an automotive propulsion system is provided, including a first propulsion system and a second propulsion system.

The first propulsion system includes: a first motor, a first retarder, a first disconnector, a third motor, a third retarder, and a third disconnector. The first disconnector is configured to implement a connection or disconnection between the first motor and the first retarder. The first disconnector is disposed between the first motor and the first retarder, or in the first retarder. The third disconnector is configured to implement a connection or disconnection between the third motor and the third retarder. The third disconnector is disposed between the third motor and the third retarder, or in the third retarder.

The second propulsion system includes: a second motor, a second retarder, and a second disconnector. The second disconnector is configured to implement a connection or disconnection between the second motor and the second retarder. The second disconnector is disposed between the second motor and the second retarder, or in the second retarder.

In the automotive propulsion system provided in this embodiment of this application, a disconnector is disposed in each of the first propulsion system and the second propulsion system. In this case, there are at least three propulsion modes: Both the first propulsion system and the second propulsion system provide power, only the first propulsion system provides power, and only the second propulsion system provides power. In addition, if only the first propulsion system or the second propulsion system provides power, the disconnector in the propulsion system that does not provide power is opened, so that the motor in the propulsion system that does not provide power is disconnected from a wheel. This can prevent the wheel from reversely dragging the motor in the propulsion system that does not provide power during traveling of an automobile, reduce an energy loss caused by the reverse drag of the motor, and increase the driving range. In addition, two motors operating independently are disposed in the first propulsion system, and each motor can independently control one wheel. This implements independent control of the torque of the two wheels, and improving a capability to get out of a trouble and operation stability performance of the vehicle.

Optionally, the second propulsion system further includes a fourth motor, a fourth retarder, and a fourth connects the second motor to the second retarder, torque of the second motor is transmitted by using the second retarder. The third motor is in the working state, the fourth disconnector connects the third motor to the third retarder, and torque of the third motor is transmitted by using the third retarder.

Optionally, the automotive propulsion system further includes a controller. The controller is configured to control starting of the first motor and closing of the second disconnector, so that the torque of the first motor is transmitted to the compressor, or the controller is configured to control opening of the second disconnector.

According to a second aspect, an automotive propulsion system is provided, including a first propulsion system and a second propulsion system.

The first propulsion system includes: a first motor, a first retarder, a first disconnector, a third motor, a third retarder, and a third disconnector. The first disconnector is configured to implement a connection or disconnection between the first motor and the first retarder. The first disconnector is disposed between the first motor and the first retarder, or in the first retarder. The third disconnector is configured to implement a connection or disconnection between the third motor and the third retarder. The third disconnector is disposed between the third motor and the third retarder, or in the third retarder.

The second propulsion system includes: a second motor, a second retarder, and a second disconnector. The second disconnector is configured to implement a connection or disconnection between the second motor and the second retarder. The second disconnector is disposed between the second motor and the second retarder, or in the second retarder.

In the automotive propulsion system provided in this embodiment of this application, a disconnector is disposed in each of the first propulsion system and the second propulsion system. In this case, there are at least three propulsion modes: Both the first propulsion system and the second propulsion system provide power, only the first propulsion system provides power, and only the second propulsion system provides power. In addition, if only the first propulsion system or the second propulsion system provides power, the disconnector in the propulsion system that does not provide power is opened, so that the motor in the propulsion system that does not provide power is disconnected from a wheel. This can prevent the wheel from reversely dragging the motor in the propulsion system that does not provide power during traveling of an automobile, reduce an energy loss caused by the reverse drag of the motor, and increase the driving range. In addition, two motors operating independently are disposed in the first propulsion system, and each motor can independently control one wheel. This implements independent control of the torque of the two wheels, and improving a capability to get out of a trouble and operation stability performance of the vehicle.

Optionally, the second propulsion system further includes a fourth motor, a fourth retarder, and a fourth disconnector. The fourth disconnector is configured to implement a connection or disconnection between the fourth motor and the fourth retarder. The fourth disconnector is disposed between the fourth motor and the fourth retarder, or in the fourth retarder.

In the automotive propulsion system provided in this embodiment of this application, two motors operating independently are disposed in the second propulsion system, and each motor can independently control one wheel. This implements independent control of the torque of the two wheels, and improving a capability to get out of a trouble and operation stability performance of the vehicle.

Optionally, the automotive propulsion system further includes a controller. The controller is configured to control the automotive propulsion system to execute a first propulsion mode, a second propulsion mode, or a third propulsion mode.

The first propulsion mode: The first motor is in a working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in the working state, the third disconnector connects the second motor to the second retarder, and torque of the second motor is transmitted by using the second retarder.

The second propulsion mode: The first motor is in the working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in a non-working state, and the third disconnector disconnects the second motor from the second retarder.

The third propulsion mode: The first motor is in the non-working state, and the first disconnector disconnects the first motor from the first retarder. The third motor is in the non-working state, and the third disconnector disconnects the third motor from the third retarder. The second motor is in the working state, the third disconnector connects the second motor to the second retarder, and torque of the second motor is transmitted by using the second retarder.

Optionally, the automotive propulsion system further includes a controller. The controller is configured to control the automotive propulsion system to execute a first propulsion mode, a second propulsion mode, or a third propulsion mode.

The first propulsion mode: The first motor is in a working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in the working state, the second disconnector connects the second motor to the second retarder, and torque of the second motor is transmitted by using the second retarder. The fourth motor is in the working state, the fourth disconnector connects the fourth motor to the fourth retarder, and torque of the fourth motor is transmitted by using the fourth retarder.

The second propulsion mode: The first motor is in the working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in a non-working state, and the second disconnector disconnects the second motor from the second retarder. The fourth motor is in the non-working state, and the fourth disconnector disconnects the fourth motor from the fourth retarder.

The third propulsion mode: The first motor is in the non-working state, and the first disconnector disconnects the first motor from the first retarder. The third motor is in the non-working state, and the third disconnector disconnects the third motor from the third retarder. The second motor is in the working state, the second disconnector connects the second motor to the second retarder, and torque of the second motor is transmitted by using the second retarder. The fourth motor is in the working state, the fourth disconnector connects the fourth motor to the fourth retarder, and torque of the fourth motor is transmitted by using the fourth retarder.

According to a third aspect, an automobile is provided, where the automobile includes the automotive propulsion system provided in either of the first aspect or the second aspect.

### BRIEF DESCRIPTION OF DRAWINGS

FIG. 1 is a functional block diagram of a vehicle 100 according to an embodiment of this application;
FIG. 2 is a schematic diagram of a structure of an automotive propulsion system 200 according to an embodiment of this application;
FIG. 3 is another schematic diagram of a structure of an automotive propulsion system 200 according to an embodiment of this application;
FIG. 4 is a schematic diagram of a structure of an automotive propulsion system 300 according to an embodiment of this application;
FIG. 5 is another schematic diagram of a structure of an automotive propulsion system 300 according to an embodiment of this application;
FIG. 6 is another schematic diagram of a structure of an automotive propulsion system 300 according to an embodiment of this application;
FIG. 7 is a schematic diagram of a structure of an automotive propulsion system 400 according to an embodiment of this application;
FIG. 8 is another schematic diagram of a structure of an automotive propulsion system 400 according to an embodiment of this application;
FIG. 9 is another schematic diagram of a structure of an automotive propulsion system 400 according to an embodiment of this application; and
FIG. 10 is another schematic diagram of a structure of an automotive propulsion system 400 according to an embodiment of this application.

### DESCRIPTION OF EMBODIMENTS

The following describes technical solutions of this application with reference to accompanying drawings.

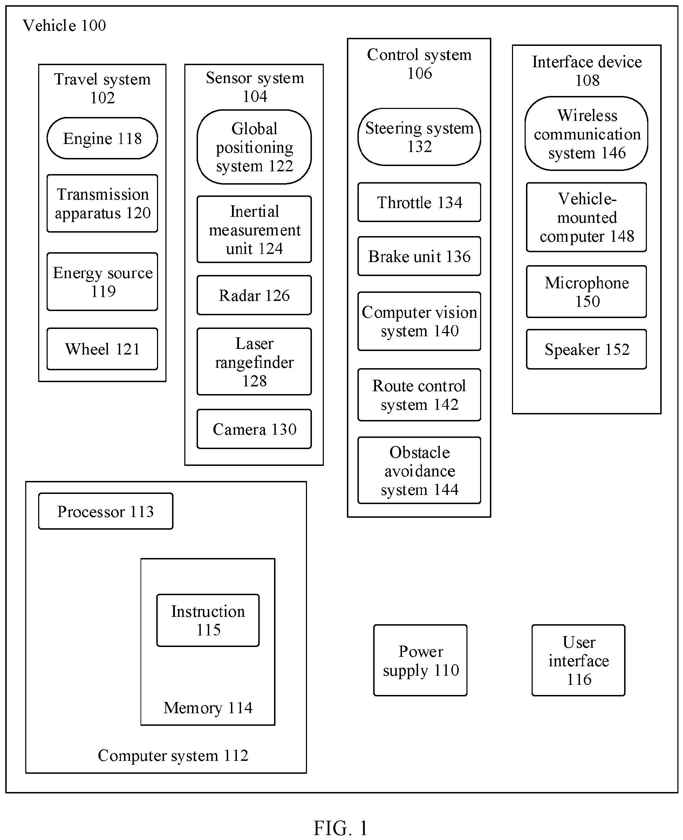

FIG. 1 is a functional block diagram of a vehicle 100 according to an embodiment of this application. In an embodiment, the vehicle 100 is configured to be in a fully or partially autonomous driving mode. For example, the vehicle 100 in the autonomous driving mode may control the vehicle 100. A manual operation may be performed to determine current statuses of the vehicle and an ambient environment of the vehicle, determine possible behavior of at least one another vehicle in the ambient environment, determine a confidence level corresponding to a possibility that the another vehicle performs the possible behavior, and control the vehicle 100 based on determined information. When the vehicle 100 is in the autonomous driving mode, the vehicle 100 may be configured to operate without interacting with a person.

The vehicle 100 may include various subsystems, for example, a travel system 102, a sensor system 104, a control system 106, one or more interface devices 108, a power supply 110, a computer system 112, and a user interface 116. In an embodiment, the vehicle 100 may include more or fewer subsystems, and each subsystem may include a plurality of members. In addition, each subsystem and member of the vehicle 100 may be interconnected in a wired or wireless manner.

The travel system 102 may include a component providing power motion to the vehicle 100. In an embodiment, the travel system 102 may include an engine 118, an energy source 119, a transmission apparatus 120 (a retarder below), and a wheel/tire 121. The engine 118 may be an internal combustion type engine, a motor, an air compression engine, or another type of engine combination, for example, a hybrid engine including a gasoline engine and a motor, or a hybrid engine including an internal combustion type engine and an air compression engine. The engine 118 converts the energy source 119 into mechanical energy.

In an electric vehicle, the energy source 119 of the travel system 102 may be a motor, providing power for traveling of the vehicle. In some embodiments, the travel system 102 further includes a disconnector, configured to adjust a connection or disconnection between the motor and the transmission apparatus 120. In some other embodiments, the travel system 102 further includes a compressor, configured to perform cooling or heating. In some other embodiments, both the transmission apparatus 120 and the compressor may be connected to a motor, to share one motor. This can reduce a weight and costs of an automobile, and improve energy utilization.

The sensor system 104 may include several sensors that sense information about the ambient environment of the vehicle 100. For example, the sensor system 104 may include a positioning system 122 (where the positioning system may be a GPS system, a BeiDou system, or another positioning system), an inertial measurement unit (IMU) 124, radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a speed, and the like) of the object. Such detection and recognition are key functions of a safe operation of the autonomous vehicle 100.

The control system 106 controls operations of the vehicle 100 and components of the vehicle 100. The control system 106 may include various members, including a steering system 132, a throttle 134, a brake unit 136, a sensor fusion algorithm 138, a computer vision system 140, a route control system 142, and an obstacle avoidance system 144.

The vehicle 100 interacts with an external sensor, another vehicle, another computer system, or a user by using the interface device 108. The interface device 108 may include a wireless communications system 146, a vehicle-mounted computer 148, a microphone 150, and/or a speaker 152.

In some embodiments, the interface device 108 provides a means for a user of the vehicle 100 to interact with the user interface 116. For example, the vehicle-mounted computer 148 may provide information to the user of the vehicle 100. The user interface 116 may further operate the vehicle-mounted computer 148 to receive user input. The vehicle-mounted computer 148 may perform operations through a touchscreen. In another case, the interface device 108 may provide a means for the vehicle 100 to communicate with another device located in the vehicle. For example, the microphone 150 may receive audio (for example, a voice command or another audio input) from the user of the vehicle 100. Similarly, the speaker 152 may output audio to the user of the vehicle 100.

The wireless communications system 146 may wirelessly communicate with one or more devices directly or through a communications network. For example, the wireless communications system 146 implements wireless communications by using a vehicle-mounted antenna, for example, may use 3G cellular communications, a global system for mobile communications (global system for mobile communications, GSM) communications technology, a wideband code division multiple access (WCDMA) communications technology, 4G cellular communications (for example, a long term evolution (LTE) communications technology), or 5G cellular communications. The wireless communications system 146 may communicate with a wireless local area network (WLAN) through Wi-Fi by using the vehicle-mounted antenna. In some embodiments, the wireless communications system 146 may communicate directly with a device through an infrared link or by using Bluetooth or ZigBee (ZigBee). Other wireless protocols, for example, various vehicle communications systems such as the wireless communications system 146, may include one or more dedicated short range communications (DSRC) devices, which may include public and/or private data communications between vehicles and/or roadside stations.

Some or all of functions of the vehicle 100 are controlled by the computer system 112. The computer system 112 may include at least one processor 113. The processor 113 executes an instruction 115 stored in a nontransient computer-readable medium such as a data storage apparatus 114. The computer system 112 may alternatively be a plurality of computing devices that control an individual component or a subsystem of the vehicle 100 in a distributed manner.

In some embodiments, the computer system 112 may control, based on a traveling status, the motor to work or not to work, and the disconnector to be opened or closed. In some other embodiments, the computer system 112 may control, based on a compressor usage, the motor to work or not to work and the disconnector to be opened or closed. The user interface 116 is used to provide information for or receive information from the user of the vehicle 100. In an embodiment, the user interface 116 may include one or more input/output devices within a set of interface devices 108, such as the wireless communications system 146, the vehicle-mounted computer 148, the microphone 150, and the speaker 152.

In an embodiment, one or more of the foregoing components may be installed separately from or associated with the vehicle 100. For example, the data storage apparatus 114 may be partially or separated from the vehicle 1100. The foregoing components may be communicatively coupled together in a wired and/or wireless manner.

In an embodiment, the foregoing components are merely examples. In an actual application, components in the foregoing modules may be added or removed based on an actual requirement. FIG. 1 should not be construed as a limitation on embodiments of the present invention.

The vehicle 100 may be an electric vehicle, including but not limited to a car, a truck, a bus, a recreational vehicle, a playground vehicle, a tram, and the like. This is not specifically limited in this embodiment of this application.

In a current four-drive electric vehicle, when a rear-drive system or a front-drive system is activated alone, the wheel drives a motor in a non-activated propulsion system in reverse. In this case, a reverse drag phenomenon occurs, causing an additional energy loss. Based on this, in this embodiment of this application, a disconnector is disposed in each of the front-drive system and the rear-drive system, configured to implement a connection or disconnection between the motor and the retarder. In this way, when only the front-drive system or the rear-drive system is activated, a disconnector in the non-activated propulsion system is opened, to disconnect the motor from the retarder, so as to disconnect the wheel from the motor. This can prevent the motor from being reversely dragged, and reduce the energy loss.

To reduce a heavy weight and the energy loss of the automobile that are caused by installation of the compressor, this embodiment of this application further proposes that both the retarder and the compressor in the front-drive system or the rear-drive system are connected to the motor. This saves a motor specifically used for the compressor, reduces the weight and the energy loss of the automobile. In addition, disconnectors are separately configured for the compressor and the retarder, so that the compressor and the retarder can independently operate. In addition, when the propulsion system configured with the disconnector does not provide power, the disconnector in the propulsion system is opened, to disconnect the motor from the retarder, so as to disconnect the wheel from the motor. This can prevent the motor from being reversely dragged, and reduce the energy loss.

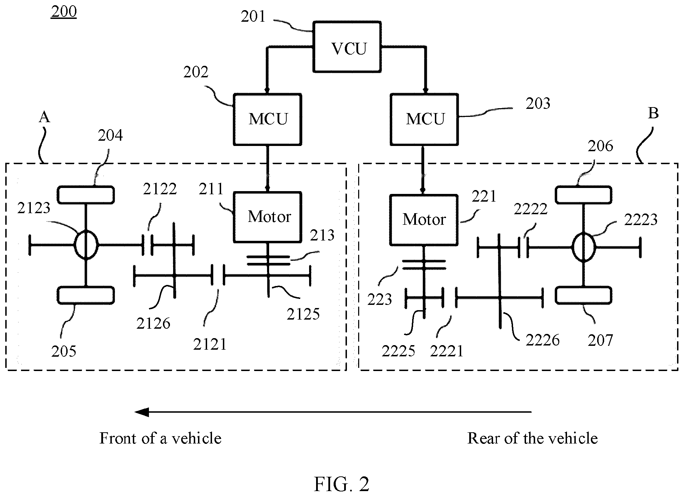

The following describes in detail the automotive propulsion system in embodiments of this application with reference to FIG. 2 to FIG. 10.

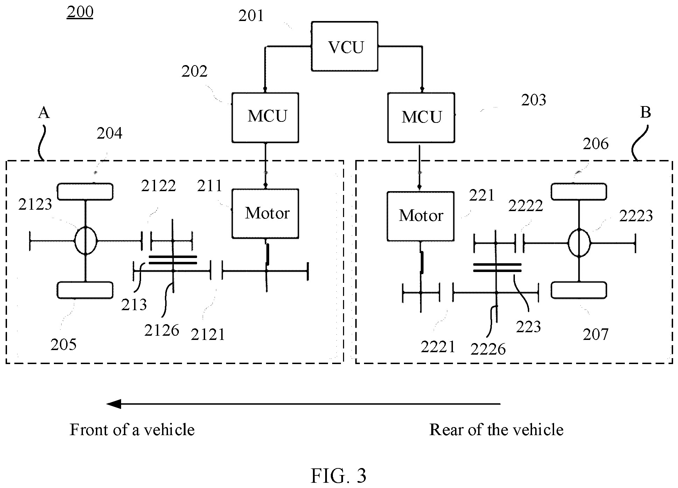

FIG. 2 is a schematic diagram of a structure of an automotive propulsion system 200 according to an embodiment of this application. FIG. 3 is another schematic diagram of a structure of an automotive propulsion system 200 according to an embodiment of this application. A difference between FIG. 2 and FIG. 3 lies in a different location of a disconnector. The following mainly uses FIG. 2 to describe the automotive propulsion system 200, and uses FIG. 3 to describe only the difference.

As shown in FIG. 2, the automotive propulsion system 200 includes a front-drive system A and a rear-drive system B. The front-drive system A and the rear-drive system B each include a motor, a retarder, and a disconnector. The disconnector is configured to implement a connection or disconnection between the motor and the retarder, to implement a connection or disconnection between the motor and the wheel.

### Front-drive system A

The front-drive system A includes a motor 211, a retarder A, a disconnector 213, a wheel 204, and a wheel 205. The motor 211 may be connected to the wheel 204 and the wheel 205 by using the retarder A. Torque of the motor 211 may be transmitted to the wheel 204 and the wheel 205 by using the retarder A, to drive the wheel 204 and the wheel 205 to rotate. The disconnector 213 is configured to implement a connection or disconnection between the motor 211 and the retarder A.

The retarder A includes a transmission member 2121 and a transmission member 2122. The transmission member 2121 is connected to the transmission member 2122 and the motor 211. The transmission member 2122 is connected to the wheel 204 and the wheel 205. Optionally, the retarder A further includes a drive shaft 2125 connected to both the motor 211 and the transmission member 2121. The motor 211 is connected to the transmission member 2121 by using the drive shaft 2125. Optionally, the retarder A further includes a drive shaft 2126 connected to both the transmission member 2121 and the transmission member 2122. The transmission member 2126 is connected to the transmission member 2125 by using the drive shaft 2126. Optionally, the retarder A further includes a differential 2123 disposed on the transmission member 2122. One end of the differential 2123 is connected to the transmission member 2122, and the other end of the differential 2123 is connected to the wheel 204 and the wheel 205.

In some embodiments, as shown in FIG. 2, the disconnector 213 is disposed between the motor 211 and the retarder A. In an example, the disconnector 213 is disposed between the transmission member 2121 and the motor 211. For example, the disconnector 213 is disposed on the drive shaft 2125 and is located in an area between the transmission member 2121 and the motor 211. If the disconnector 213 is closed, the transmission member 2121 is connected to the motor 211, so that the retarder A is connected to the motor 211. If the disconnector 213 is open, the transmission member 2121 is disconnected from the motor 211, so that the retarder A is disconnected from the motor 211.

In some other embodiments, the disconnector 213 is disposed in the retarder A.

In an example, as shown in FIG. 3, the disconnector 213 is disposed between the transmission member 2121 and the transmission member 2122 in the retarder A. For example, the disconnector 213 is disposed on the drive shaft 2126 and is located in an area between the transmission member 2121 and the transmission member 2122. If the disconnector 213 is closed, the transmission member 2122 is connected to the transmission member 2121. The transmission member 2122 is connected to the motor 211 by using the transmission member 2121, so that the retarder A is connected to the motor 211. If the disconnector 213 is open, the transmission member 2122 is disconnected from the transmission member 2121. The transmission member 2122 is disconnected from the motor 211 by using the transmission member 2121, so that the retarder A is disconnected from the motor 211.

In another example, the disconnector 213 (not shown in the figure) is disposed on the differential 2123 in the retarder A. If the disconnector 213 is closed, the differential 2123 is connected to the transmission member 2122. The differential 2123 is connected to the motor 211 by using the transmission member 2122 and the transmission member 2121, so that the retarder A is connected to the motor 211. If the disconnector 213 is open, the differential 2123 is disconnected from the transmission member 2122. The differential 2123 is disconnected from the motor 212 by using the transmission member 2122 and the transmission member 2121, so that the retarder A is disconnected from the motor 211. The disconnector 213 is disposed on the differential. Because the differential is close to the wheel and far away from the motor, a loss caused by the reverse drag can be further reduced when the motor does not work.

### Rear-drive system B

The rear-drive system B includes a motor 221, a retarder B, a disconnector 223, a wheel 206 and a wheel 207. The motor 221 may be connected to the wheel 206 and the wheel 207 by using the retarder B. Torque of the motor 221 may be transmitted to the wheel 206 and the wheel 207 by using the retarder B, to drive the wheel 206 and the wheel 207 to rotate. The disconnector 223 is configured to implement a connection or disconnection between the motor 221 and the retarder B.

The retarder B includes a transmission member 2221 and a transmission member 2222. The transmission member 2221 is connected to the transmission member 2222 and the motor 221. The transmission member 2222 is connected to the wheel 206 and the wheel 207. Optionally, the retarder B further includes a drive shaft 2225 connected to both the motor 221 and the transmission member 2221. The motor 221 is connected to the transmission member 2221 by using the drive shaft 2225. Optionally, the retarder B further includes a drive shaft 2226 connected to both the transmission member 2221 and the transmission member 2222. The transmission member 2221 is connected to the transmission member 2222 by using the drive shaft 2226. Optionally, the retarder B further includes a differential 2223 disposed on the transmission member 2222. One end of the differential 2223 is connected to the transmission member 2222, and the other end of the differential 2223 is connected to the wheel 206 and the wheel 207.

In some embodiments, as shown in FIG. 2, the disconnector 223 is disposed between the motor 221 and the retarder B. In an example, the disconnector 223 is disposed between the transmission member 2221 and the motor 221. For example, the disconnector 223 is disposed on the drive shaft 2225 and is located in an area between the transmission member 2221 and the motor 221. If the disconnector 223 is closed, the transmission member 2221 is connected to the motor 221, so that the retarder B is connected to the motor 221. If the disconnector 223 is open, the transmission member 2221 is disconnected from the motor 221, so that the retarder B is disconnected from the motor 221.

In some other embodiments, the disconnector 223 is disposed in the retarder B.

In an example, as shown in FIG. 3, the disconnector 223 is disposed between the transmission member 2221 and the transmission member 2222 in the retarder B. For example, the disconnector 223 is disposed on the drive shaft 2226 and is located in an area between the transmission member 2221 and the transmission member 2222. If the disconnector 223 is closed, the transmission member 2222 is connected to the transmission member 2221. The transmission member 2222 is connected to the motor 221 by using the transmission member 2221, so that the retarder B is connected to the motor 221. If the disconnector 223 is open, the transmission member 2222 is disconnected from the transmission member 2221. The transmission member 2222 is disconnected from the motor 221 by using the transmission member 2221, so that the retarder B is disconnected from the motor 221.

In another example, the disconnector 223 (not shown in the figure) is disposed on the differential 2223 in the retarder B. If the disconnector 223 is closed, the differential 2223 is connected to the transmission member 2222. The differential 2223 is connected to the motor 221 by using the transmission member 2222 and the transmission member 2221, so that the retarder B is connected to the motor 221. If the disconnector 223 is open, the differential 2223 is disconnected from the transmission member 2222. The differential 2223 is disconnected from the motor 221 by using the transmission member 2222 and the transmission member 2221, so that the retarder B is disconnected from the motor 221.

It should be understood that various possible locations of the disconnector 213 and the disconnector 223 in the foregoing examples may be combined with each other. This is not limited in embodiments of this application. For example, the disconnector 213 is disposed between the motor 211 and the transmission member 2121 in the retarder A, and the disconnector 223 is disposed between the transmission member 2221 and the transmission member 2222 in the retarder B. For another example, the disconnector 213 is disposed between the transmission member 2121 and the transmission member 2122 in the retarder A, and the disconnector 223 is disposed on the differential 2223 in the retarder B.

For example, a transmission member (for example, the transmission member 2121 and the transmission member 2122, and the transmission member 2221 or the transmission member 2222) in this embodiment of this application may be one or two pairs of gear drive units, or may be a mechanical drive unit such as a chain. Explanations of a transmission member in the automotive propulsion system 300 or 400 in the following are the same as that described herein. Details are not described subsequently.

For example, a motor (for example, the motor 211 or the motor 221) in embodiments of this application may be a permanent-magnet synchronous motor. Explanations of a motor in the automotive propulsion system 300 or 400 in the following are the same as that described herein. Details are not described subsequently.

For example, a disconnector (for example, the disconnector 213 or the disconnector 223) in embodiments of this application may be any apparatus that can close or open. For example, the disconnector may be a synchronizer. For another example, the disconnector may be a clutch, and the clutch may be a one-way clutch or a two-way clutch. Explanations of a disconnector in the automotive propulsion system 300 or 400 in the following are the same as that described herein. Details are not described subsequently.

Still as shown in FIG. 2, the automotive propulsion system 200 further includes a vehicle control unit (VCU) 201, configured to control the front-drive system A and the rear-drive system B, to implement a plurality of propulsion modes of the automotive propulsion system 200. Specifically, the VCU 201 sends an instruction based on a traveling status of an automobile, to control the motor 211 to work or not to work and the disconnector 213 to be closed or opened, and to control the motor 221 to work or not to work and the disconnector 223 to be closed or opened.

Optionally, the automotive propulsion system 200 further includes a motor control unit (MCU) 202 corresponding to the front-drive system A and a motor control unit 203 corresponding to the rear-drive system B. The MCU 202 and the MCU 203 are separately connected to the VCU 201, to execute the instruction sent by the VCU 201. Specifically, the MCU 202 controls the motor 211 and the disconnector 213 in the front-drive system A according to the instruction sent by the VCU 201. The MCU 203 controls the motor 221 and the disconnector 223 in the rear-drive system B according to the instruction sent by the VCU 201.

It should be noted that, in embodiments of this application, that the motor works indicates that the motor is in a working state, and the motor outputs torque to provide power. That the motor does not work indicates that the motor is turned off, and is in a non-working state, and the motor neither outputs the torque nor provides power.

With reference to the VCU 201, the MCU 202, the MCU 203, the front-drive system A, and the rear-drive system B shown in FIG. 2, the following describes examples of a plurality of propulsion modes of the automotive propulsion system.

### Propulsion mode 1: Both the front-drive system A and the rear-drive system B provide power

In the propulsion mode 1, the motor 211 in the front-drive system A is in the working state, the motor 211 outputs torque to provide power, and the disconnector 213 is closed, so that the motor 211 is connected to the retarder A. The motor 221 in the rear-drive system B is in the working state, the motor 221 outputs torque to provide power, and the disconnector 223 is closed, so that the motor 221 is connected to the retarder B. In this case, the torque output by the motor 211 is transmitted to the wheel 204 and the wheel 205 by using the retarder A, and the torque output by the motor 221 is transmitted to the wheel 206 and the wheel 207 by using the retarder B, so that the automobile travels.

In an implementation, for example, the VCU 201 sends an instruction to the MCU 202 and the MCU 203 based on a traveling status, to indicate the propulsion mode 1. The MCU 202 controls, according to the instruction, the motor 211 to work and the disconnector 213 to be closed. The MCU 203 controls, according to the instruction, the motor 221 to work and the disconnector 223 to be closed.

### Propulsion mode 2: The front-drive system A provides power and the rear-drive system B does not provide power

In the propulsion mode 2, the motor 211 in the front-drive system A is in the working state, the motor 211 outputs torque to provide power, and the disconnector 213 is closed, so that the motor 211 is connected to the retarder A. The motor 221 in the rear-drive system B is in the non-working state, the motor 221 neither outputs torque nor provides power, and the disconnector 223 is open, so that the motor 221 is disconnected from the retarder B. In this case, only the front-drive system A provides power, and the torque output by the motor 211 is transmitted to the wheel 204 and the wheel 205 by using the retarder A, to drive the wheel 206 and the wheel 207 to rotate, so that the automobile travels.

In an implementation, for example, the VCU 201 sends an instruction to the MCU 202 and the MCU 203 based on the traveling status, to indicate the propulsion mode 2. The MCU 202 controls, according to the instruction, the motor 211 to work and the disconnector 213 to be closed. The MCU 203 controls, according to the instruction, the motor 221 not to work and the disconnector 223 to be opened.

If the rear-drive system B does not provide power, because the disconnector 223 is open, the wheel 206 and the wheel 207 are disconnected from the motor 221 in the rear-drive system B, and the torque is not reversely transmitted to the motor 221. Therefore, the motor 221 is not reversely dragged, and an energy loss is reduced.

### Propulsion mode 3: The front-drive system A does not provide power and the rear-drive system B provides power

In the propulsion mode 3, the motor 211 in the front-drive system A is in the non-working state, the motor 211 neither outputs torque nor provides power, and the disconnector 213 is open, so that the motor 211 is disconnected from the retarder A. The motor 221 in the rear-drive system B is in the working state, the motor 221 outputs torque to provide power, and the disconnector 223 is closed, so that the motor 221 is connected to the retarder B. In this case, only the rear-drive system B provides power, and the torque output by the motor 221 is transmitted to the wheel 206 and the wheel 207 by using the retarder B, to drive the wheel 204 and the wheel 205 to rotate, so that the automobile travels.

In an implementation, for example, the VCU 201 sends an instruction to the MCU 202 and the MCU 203 based on the traveling status, to indicate the propulsion mode 3. The MCU 202 controls, according to the instruction, the motor 211 not to work and the disconnector 213 to be opened. The MCU 203 controls, according to the instruction, the motor 221 to work and the disconnector 223 to be closed.

If the front-drive system A does not provide power, because the disconnector 213 is open, the wheel 204 and the wheel 205 are disconnected from the motor 211 in the front-drive system A, and the torque is not reversely transmitted to the motor 211. Therefore, the motor 211 is not reversely dragged, and an energy loss is reduced.

In the automotive propulsion system provided in this embodiment of this application, a disconnector (for example, the disconnector 213 or the disconnector 223) is disposed in each of the front-drive system and the rear-drive system. In this case, there are at least three propulsion modes: Both the front-drive system and the rear-drive system provide power, only the front-drive system provides power, and only the rear-drive system provides power. In addition, if only the front-drive system or the rear-drive system provides power, the disconnector in the propulsion system that does not provide power may be opened, so that the motor in the propulsion system that does not provide power is disconnected from a wheel. This can prevent the wheel from reversely dragging the motor in the propulsion system that does not provide power during traveling of the automobile, reduce the energy loss caused by the reverse drag of the motor, and increase a driving range. In addition, a disconnector is disposed in each of the front-drive system and the rear-drive system. When the automobile breaks down, two disconnectors are opened, to facilitate towing away the automobile.

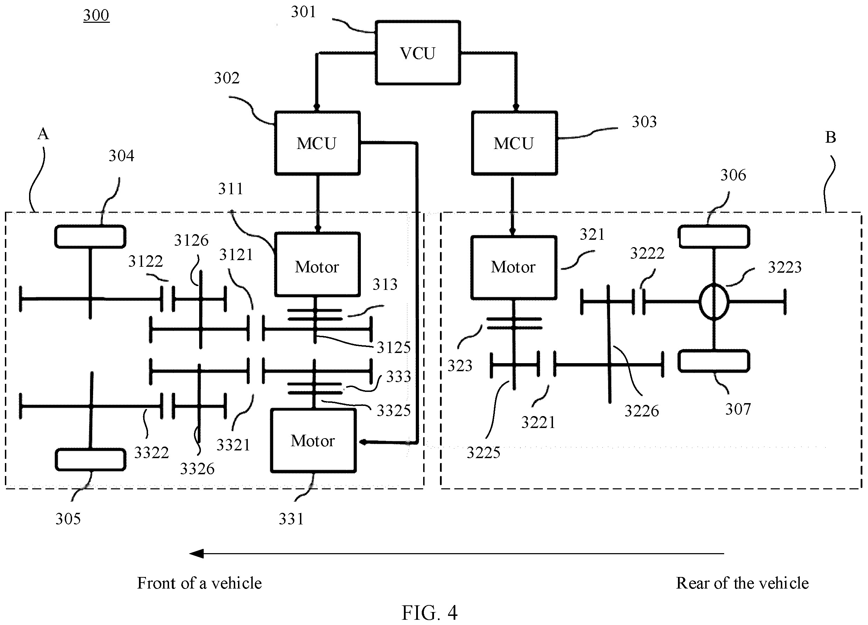

FIG. 4 is a schematic diagram of a structure of an automotive propulsion system 300 according to an embodiment of this application. As shown in FIG. 4, the automotive propulsion system 300 includes a front-drive system A and a rear-drive system B. A difference between the automotive propulsion system 300 and the automotive propulsion system 200 lies in that the front-drive system A includes two motors, each motor corresponds to one retarder, one disconnector, and one wheel, and each motor can output torque, and provide power for a wheel by using a corresponding retarder.

### Front-drive system A

The front-drive system A includes a motor 311, a retarder A, a disconnector 313, a motor 331, a retarder C, a disconnector 333, a wheel 304, and a wheel 305. The motor 311 may be connected to the wheel 304 by using the retarder A. Torque of the motor 311 may be transmitted to the wheel 304 by using the retarder A, to drive the wheel 304 to rotate. The disconnector 313 is configured to implement a connection or disconnection between the motor 311 and the retarder A. The motor 331 may be connected to the wheel 305 by using the retarder C, the torque of the motor 331 may be transmitted to the wheel 305 by using the retarder C, to drive the wheel 305 to rotate, and the disconnector 333 is configured to disconnect the motor 331 from the retarder C.

The retarder A includes a transmission member 3121 and a transmission member 3122. The transmission member 3121 is connected to the transmission member 3122 and the motor 311. The transmission member 3122 is connected to the wheel 304. Optionally, the retarder A further includes a drive shaft 3125 connected to both the motor 311 and the transmission member 3121. The motor 311 is connected to the transmission member 3121 by using the drive shaft 3125. Optionally, the retarder A further includes a drive shaft 3126 connected to both the transmission member 3121 and the transmission member 3122. The transmission member 3122 is connected to the transmission member 3121 by using the drive shaft 3126.

In some embodiments, as shown in FIG. 4, the disconnector 313 is disposed between the retarder A and the motor 311. In an example, the disconnector 313 is disposed between the transmission member 3121 and the motor 311. For example, the disconnector 313 is disposed on the drive shaft 3125 and is located in an area between the transmission member 3121 and the motor 311. If the disconnector 313 is closed, the transmission member 3121 is connected to the motor 311, so that the retarder A is connected to the motor 311. If the disconnector 313 is open, the transmission member 3121 is disconnected from the motor 311, so that the retarder A is disconnected from the motor 311.

In some other embodiments, the disconnector 313 is disposed in the retarder A. In an example, the disconnector 313 (not shown in the figure) is disposed between the transmission member 3121 and the transmission member 3122 in the retarder A. For example, the disconnector 313 is disposed on the drive shaft 3126 and is located in an area between the transmission member 3121 and the transmission member 3122. If the disconnector 313 is closed, the transmission member 3122 is connected to the transmission member 3121. The transmission member 3122 is connected to the motor 311 by using the transmission member 3121, so that the retarder A is connected to the motor 311. If the disconnector 313 is open, the transmission member 3122 is disconnected from the transmission member 3121. The transmission member 3122 is disconnected from the motor 311 by using the transmission member 3121, so that the retarder A is disconnected from the motor 311. It may be understood that a relationship among the disconnector 313, the transmission member 3121, and the transmission member 3122 in this embodiment may be similar to a relationship among the disconnector 213, the transmission member 2121, and the transmission member 2122, shown in FIG. 3.

The retarder C includes a transmission member 3321 and a transmission member 3322. The transmission member 3321 is connected to the transmission member 3322 and the motor 321. The transmission member 3322 is connected to the wheel 305. Optionally, the retarder C further includes a drive shaft 3325 connected to both the motor 331 and the transmission member 3321. The motor 331 is connected to the transmission member 3321 by using the drive shaft 3325. Optionally, the retarder C further includes a drive shaft 3326 connected to both the transmission member 3321 and the transmission member 3322. The transmission member 3321 is connected to the transmission member 3322 by using the drive shaft 3326.

In some embodiments, as shown in FIG. 4, the disconnector 333 is disposed between the retarder C and the motor 331. In an example, the disconnector 333 is disposed between the transmission member 3321 and the motor 331. For example, the disconnector 333 is disposed on the drive shaft 3325 and is located in an area between the transmission member 3321 and the motor 331. If the disconnector 333 is closed, the transmission member 3321 is connected to the motor 331, so that the retarder C is connected to the motor 331. If the disconnector 333 is open, the transmission member 3321 is disconnected from the motor 331, so that the retarder C is disconnected from the motor 331.

In some other embodiments, the disconnector 333 is disposed in the retarder C. In an example, the disconnector 333 (not shown in the figure) is disposed between the transmission member 3321 and the transmission member 3322 in the retarder C. For example, the disconnector 333 is disposed on the drive shaft 3326 and is located in an area between the transmission member 3321 and the transmission member 3322. If the disconnector 333 is closed, the transmission member 3322 is connected to the transmission member 3321. The transmission member 3322 is connected to the motor 331 by using the transmission member 3321, so that the retarder C is connected to the motor 331. If the disconnector 333 is open, the transmission member 3322 is disconnected from the transmission member 3321. The transmission member 3322 is disconnected from the motor 331 by using the transmission member 3321, so that the retarder C is disconnected from the motor 331. It may be understood that a relationship among the disconnector 333, the transmission member 3321, and the transmission member 3322 in this embodiment may be similar to a relationship among the disconnector 213, the transmission member 2121, and the transmission member 2122, shown in FIG. 3.

### Rear-drive system B

The rear-drive system B includes a motor 321, a retarder B, a disconnector 323, a wheel 306 and a wheel 307. The motor 321 may be connected to the wheel 306 and the wheel 307 by using the retarder B. Torque of the motor 321 may be transmitted to the wheel 306 and the wheel 307 by using the retarder B, to drive the wheel 306 and the wheel 307 to rotate. The disconnector 323 is configured to implement a connection or disconnection between the motor 321 and the retarder B.

The retarder B includes a transmission member 3221 and a transmission member 3222. The transmission member 3221 is connected to the transmission member 3222 and the motor 321. The transmission member 3222 is connected to the wheel 306 and the wheel 307. Optionally, the retarder B further includes a drive shaft 3225 connected to both the motor 321 and the transmission member 3221. The motor 321 is connected to the transmission member 3221 by using the drive shaft 3225. Optionally, the retarder B further includes a drive shaft 3226 connected to both the transmission member 3221 and the transmission member 3222. The transmission member 3221 is connected to the transmission member 3222 by using the drive shaft 3226. Optionally, the retarder B further includes a differential 3223 disposed on the transmission member 3222. One end of the differential 3223 is connected to the transmission member 3222, and the other end of the differential 3223 is connected to the wheel 306 and the wheel 307.

In some embodiments, as shown in FIG. 4, the disconnector 323 is disposed between the motor 321 and the retarder B. In an example, the disconnector 323 is disposed between the transmission member 3221 and the motor 321. For example, the disconnector 323 is disposed on the drive shaft 3225 and is located in an area between the transmission member 3221 and the motor 321. If the disconnector 323 is closed, the transmission member 3221 is connected to the motor 321, so that the retarder B is connected to the motor 321. If the disconnector 323 is open, the transmission member 3221 is disconnected from the motor 321, so that the retarder B is disconnected from the motor 321.

In some other embodiments, the disconnector 323 is disposed in the retarder B.

In an example, the disconnector 323 (not shown in the figure) is disposed between the transmission member 3221 and the transmission member 3222 in the retarder B. For example, the disconnector 323 is disposed on the drive shaft 3226 and is located in an area between the transmission member 3221 and the transmission member 3222. If the disconnector 323 is closed, the transmission member 3222 is connected to the transmission member 3221. The transmission member 3222 is connected to the motor 321 by using the transmission member 3221, so that the retarder B is connected to the motor 321. If the disconnector 323 is open, the transmission member 3222 is disconnected from the transmission member 3221. The transmission member 3222 is disconnected from the motor 321 by using the transmission member 3221, so that the retarder B is disconnected from the motor 321.

In another example, the disconnector 323 (not shown in the figure) is disposed on the differential 3223 in the retarder B. If the disconnector 323 is closed, the differential 3223 is connected to the transmission member 3222. The differential 3223 is connected to the motor 321 by using the transmission member 3222 and the transmission member 3221, so that the retarder B is connected to the motor 321. If the disconnector 323 is open, the differential 3223 is disconnected from the transmission member 3222. The differential 3223 is disconnected from the motor 321 by using the transmission member 3222 and the transmission member 3221, so that the retarder B is disconnected from the motor 321.

It may be understood that a structure of the disconnector 323 disposed in the retarder B may be similar to a structure of the disconnector 223 in the automotive propulsion system 200 disposed in the retarder B.

It should be understood that various possible locations of the disconnector 313, the disconnector 323, and the disconnector 333 in the foregoing examples may be combined with each other. This is not limited in embodiments of this application. For example, the disconnector 313 is disposed between the motor 311 and the transmission member 3121 in the retarder A, the disconnector 323 is disposed on the differential 3223, and the disconnector 333 is disposed between the transmission member 3321 and the transmission member 3322 in the retarder C.

Still as shown in FIG. 4, the automotive propulsion system 300 further includes a VCU 301, configured to control the front-drive system A and the rear-drive system B, to implement a plurality of propulsion modes of the automotive propulsion system 300. Specifically, the VCU 301 sends an instruction based on a traveling status of an automobile, to control the motor 311 to work or not to work and the disconnector 313 to be closed or opened, to control the motor 331 to work or not to work and the disconnector 333 to be closed or opened, and to control the motor 321 to work or not to work and the disconnector 323 to be closed or opened.

Optionally, the automotive propulsion system 300 further includes an MCU 302 corresponding to the front-drive system A and a motor control unit 303 corresponding to the rear-drive system B. The MCU 302 and the MCU 303 are both connected to the VCU 301, to execute the instruction sent by the VCU 301. Specifically, the MCU 302 controls, according to the instruction sent by the VCU 301, the motor 311 and the disconnector 313 in the front-drive system A, and controls the motor 331 and the disconnector 333 in the front-drive system A. The MCU 303 controls the motor 321 and the disconnector 323 in the rear-drive system B according to the instruction sent by the VCU 301.

With reference to the VCU 301, the MCU 302, the MCU 303, the front-drive system A, and the rear-drive system B shown in FIG. 4, the following describes a plurality of propulsion modes of the automotive propulsion system 300 as an example.

### Propulsion mode 1: Both the front-drive system A and the rear-drive system B provide power

In the propulsion mode 1, the motor 311 and the motor 331 in the front-drive system A are in a working state, the motor 311 outputs torque to provide power, and the disconnector 313 is closed, so that the motor 311 is connected to the retarder A. The motor 331 outputs torque to provide power, and the disconnector 333 is closed, so that the motor 331 is connected to the retarder C. The motor 321 of the rear-drive system B is in the working state, the motor 321 outputs torque to provide power, and the disconnector 323 is closed, so that the motor 321 is connected to the retarder B. In this case, the torque output by the motor 311 is transmitted to the wheel 304 by using the retarder A, the torque output by the motor 331 is transmitted to the wheel 305 by using the retarder C, and the torque output by the motor 321 is transmitted to the wheel 306 and the wheel 307 by using the retarder B, so that the automobile travels.

In an implementation, for example, the VCU 301 sends an instruction to the MCU 302 and the MCU 303 based on a traveling status, to indicate the propulsion mode 1. The MCU 302 controls, according to the instruction, the motor 311 to work and the disconnector 313 to be closed, and controls the motor 331 to work and the disconnector 333 to be closed. The MCU 303 controls, according to the instruction, the motor 321 to work and the disconnector 323 to be closed.

### Propulsion mode 2: The front-drive system A provides power and the rear-drive system B does not provide power

In the propulsion mode 2, the motor 311 and the motor 331 in the front-drive system A are in the working state, the motor 311 outputs torque to provide power, and the disconnector 313 is closed, so that the motor 311 is connected to the retarder A. The motor 331 outputs torque to provide power, and the disconnector 333 is closed, so that the motor 331 is connected to the retarder C. The motor 321 of the rear-drive system B is in a non-working state, the motor 321 neither outputs torque nor provides power, and the disconnector 323 is open, so that the motor 321 is disconnected from the retarder B. In this case, only the front-drive system A provides power, the torque output by the motor 311 is transmitted to the wheel 204 by using the retarder A, the torque output by the motor 331 is transmitted to the wheel 205 by using the retarder C, to drive the wheel 306 and the wheel 307 to rotate, so that the automobile travels.

In an implementation, for example, the VCU 301 sends an instruction to the MCU 302 and the MCU 303 based on the traveling status, to indicate the propulsion mode 2. The MCU 302, controls, according to the instruction, the motor 311 to work and the disconnector 313 to be closed, and controls the motor 331 to work and the disconnector 333 to be closed. The MCU 303 controls, according to the instruction, the motor 321 not to work and the disconnector 323 to be opened.

If the rear-drive system B does not provide power, because the disconnector 323 is open, the wheel 306 and the wheel 307 are disconnected from the motor 321 in the rear-drive system B, and the torque is not reversely transmitted to the motor 321. Therefore, the motor 321 is not reversely dragged, and an energy loss is reduced.

### Propulsion mode 3: The front-drive system A does not provide power and the rear-drive system B provides power

In the propulsion mode 3, the motor 311 and the motor 331 in the front-drive system A are in the non-working state, the motor 311 neither outputs torque nor provides power, and the disconnector 313 is open, so that the motor 311 is disconnected from the retarder A. The motor 331 neither outputs torque nor provides power, and the disconnector 333 is open, so that the motor 331 is disconnected from the retarder C. The motor 321 of the rear-drive system B is in the working state, the motor 321 outputs torque to provide power, and the disconnector 323 is closed, so that the motor 321 is connected to the retarder B. In this case, only the rear-drive system B provides power, and the torque output by the motor 321 is transmitted to the wheel 306 and the wheel 307 by using the retarder B, to drive the wheel 304 and the wheel 305 to rotate, so that the automobile travels.

In an implementation, for example, the VCU 301 sends an instruction to the MCU 302 and the MCU 303 based on the traveling status, to indicate the propulsion mode 3. The MCU 302, controls, according to the instruction, the motor 311 not to work and the disconnector 313 to be opened, and controls the motor 331 not to work and the disconnector 333 to be opened. The MCU 303 controls, according to the instruction, the motor 321 to work and the disconnector 323 to be closed.

If the front-drive system A does not provide power, because the disconnector 313 and the disconnector 333 are open, the wheel 304 is disconnected from the motor 311 in the front-drive system A, the wheel 305 is disconnected from the motor 331 in the front-drive system A, and torque is not reversely transmitted to the motor 311 and the motor 331. Therefore, the motor 311 and the motor 331 are not reversely dragged, and an energy loss is reduced.

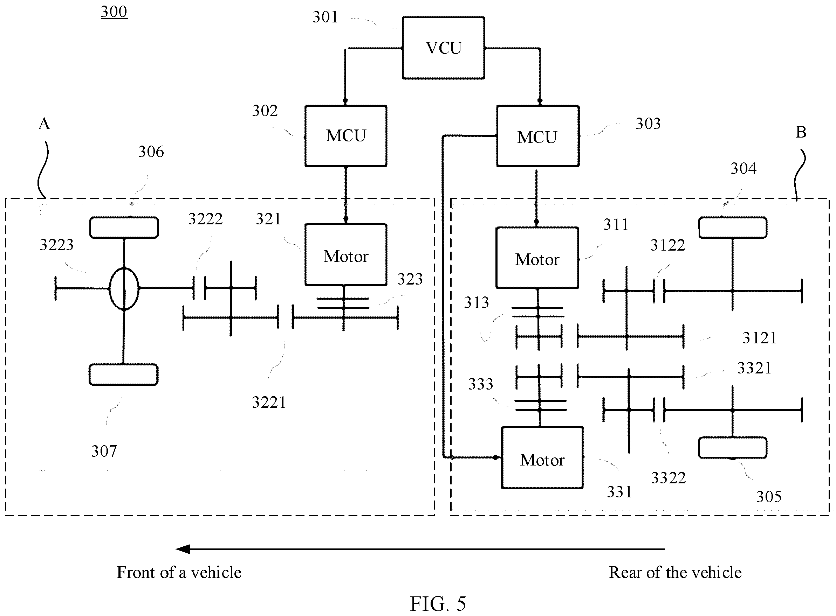

FIG. 5 is another schematic diagram of a structure of an automotive propulsion system 300 according to an embodiment of this application. A difference from FIG. 4 lies in that a front-drive system A in FIG. 5 is equivalent to the rear-drive system B in FIG. 4, and includes a motor 321, a retarder B, a disconnector 323, a wheel 306, and a wheel 307. A rear-drive system B in FIG. 5 is equivalent to the front-drive system A in FIG. 4, and includes a motor 311, a retarder A, a disconnector 313, a motor 331, a retarder C, a disconnector 333, a wheel 304, and a wheel 305. For specific descriptions, refer to the related descriptions of FIG. 4. For brevity, details are not described herein again.

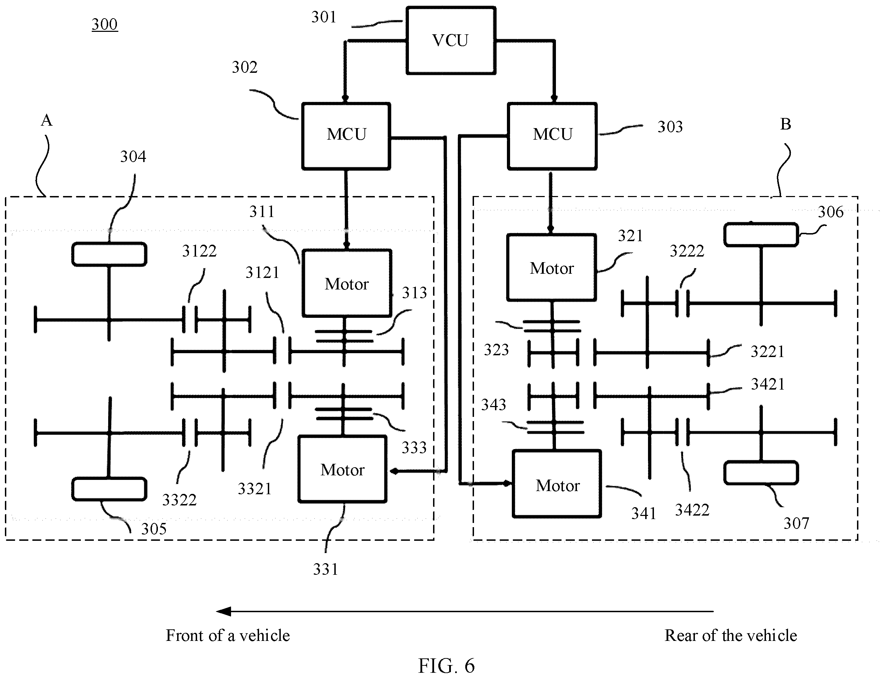

FIG. 6 is another schematic diagram of a structure of an automotive propulsion system 300 according to an embodiment of this application. Both a front-drive system A and a rear-drive system B in FIG. 6 include two motors. Each motor corresponds to one retarder, one disconnector, and one wheel, and each motor can output torque, and provide power for a wheel by using a corresponding retarder. The front-drive system A is the same as the front-drive system A shown in FIG. 4, and details are not described again. Because the rear-drive system B is similar to the front-drive system A, the following briefly describes the rear-drive system B.

The rear-drive system B includes a motor 321, a retarder B, a disconnector 323, a motor 341, a retarder D, a disconnector 343, a wheel 306, and a wheel 307. The motor 321 may be connected to the wheel 306 by using the retarder B. Torque of the motor 321 may be transmitted to the wheel 306 by using the retarder B. The disconnector 323 is configured to implement a connection or disconnection between the motor 321 and the retarder B. The motor 341 may be connected to the wheel 307 by using the retarder D. Torque of the motor 341 may be transmitted to the wheel 307 by using the retarder D. The disconnector 343 is configured to implement a connection or disconnection between the motor 341 and the retarder D.

A structure formed by the motor 321, the retarder B, and the disconnector 323 and a structure formed by the motor 341, the retarder D, and the disconnector 343 in the rear-drive system B are similar to a structure formed by the motor 311, the retarder A, and the disconnector 313 or a structure formed by the motor 331, the retarder C, and the disconnector 333 in the front-drive system A shown in FIG. 4. For specific descriptions, refer to the related descriptions of FIG. 4. Details are not described again.

In the automotive propulsion system provided in this embodiment of this application, a disconnector is disposed in each of the front-drive system and the rear-drive system. In this case, there are at least three propulsion modes: Both the front-drive system and the rear-drive system provide power, only the front-drive system provides power, and only the rear-drive system provides power. In addition, if only the front-drive system or the rear-drive system provides power, the disconnector in the propulsion system that does not provide power may be opened, so that the motor in the propulsion system that does not provide power is disconnected from a wheel. This can prevent the wheel from reversely dragging the motor in the propulsion system that does not provide power during traveling of the automobile, reduce an energy loss caused by the reverse drag of the motor, and increase a driving range. In addition, a disconnector is disposed in each of the front-drive system and the rear-drive system. When the automobile breaks down, two disconnectors are opened, to facilitate towing away the automobile. In addition, two motors operating independently are disposed in the front-drive system and/or the rear-drive system, and each motor can independently control one wheel. This implements independent control of torque of the two wheels, and improving a capability to get out of a trouble and operation stability performance of the vehicle.

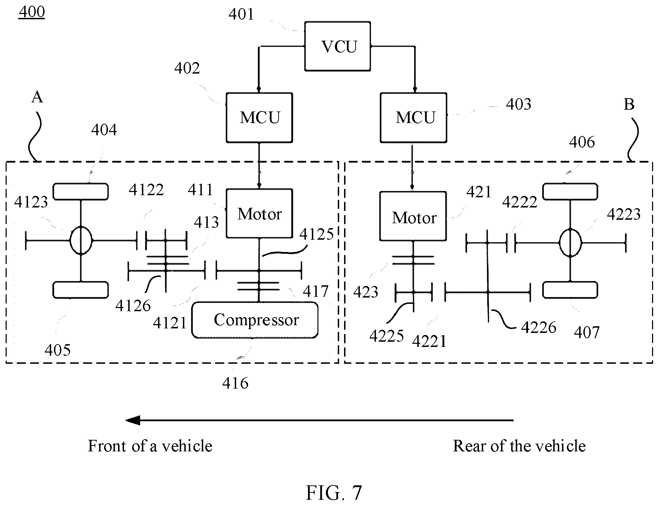

FIG. 7 is a schematic diagram of a structure of an automotive propulsion system 400 according to an embodiment of this application. In the automotive propulsion system 400, an air conditioner compressor, referred to as a "compressor" for short, is added to a front-drive system A, so that the automotive propulsion system is not only used for traveling, but also used for cooling and heating. The compressor and a retarder used for traveling may share one motor, which reduces a weight and costs of an automobile, and helps improve use efficiency of the motor, to save energy. In addition, disconnectors are separately configured for the compressor and the retarder. This can implement independent operation of traveling and the compressor, prevent a motor that does not provide power from being reversely dragged, and reduce an energy loss. The following describes the automotive propulsion system 400 in detail.

### Front-drive system A

The front-drive system A includes a motor 411, a retarder A, a disconnector 413, a wheel 404, and a wheel 405. The motor 411 may be connected to the wheel 404 and the wheel 405 by using the retarder A. Torque of the motor 411 may be transmitted to the wheel 404 and the wheel 405 by using the retarder A, to drive the wheel 404 and the wheel 405 to rotate. The disconnector 413 is configured to implement a connection or disconnection between the motor 411 and the retarder A.

The retarder A includes a transmission member 4121 and a transmission member 4122. The transmission member 4121 is connected to the transmission member 4122 and the motor 411. The transmission member 4122 is connected to the wheel 404 and the wheel 405. Optionally, the retarder A further includes a drive shaft 4125 connected to both the motor 411 and the transmission member 4121. The motor 411 is connected to the transmission member 4121 by using the drive shaft 4125. Optionally, the retarder A further includes a drive shaft 4126 connected to both the transmission member 4121 and the transmission member 4122. The transmission member 4126 is connected to the transmission member 4125 by using the drive shaft 4126. Optionally, the retarder A further includes a differential 4123 disposed on the transmission member 4122. One end of the differential 4123 is connected to the transmission member 2122, and the other end of the differential 4123 is connected to the wheel 404 and the wheel 405.

In some embodiments, the disconnector 413 is disposed in the retarder A.

In an example, as shown in FIG. 7, the disconnector 413 is disposed between the transmission member 4121 and the transmission member 4122 in the retarder A. For example, the disconnector 413 is disposed on the drive shaft 4126 and is located in an area between the transmission member 4121 and the transmission member 4122. If the disconnector 413 is closed, the transmission member 4122 is connected to the transmission member 4121. The transmission member 4122 is connected to the motor 411 by using the transmission member 4121, so that the retarder A is connected to the motor 411. If the disconnector 413 is open, the transmission member 4122 is disconnected from the transmission member 4121. The transmission member 4122 is disconnected from the motor 411 by using the transmission member 4121, so that the retarder A is disconnected from the motor 411.

In another example, the disconnector 413 (not shown in the figure) is disposed on the differential 4123 in the retarder A. If the disconnector 413 is closed, the differential 4123 is connected to the transmission member 4122. The differential 4123 is connected to the motor 411 by using the transmission member 4122 and the transmission member 4121, so that the retarder A is connected to the motor 411. If the disconnector 413 is open, the differential 4123 is disconnected from the transmission member 4122. The differential 4123 is disconnected from the motor 411 by using the transmission member 4122 and the transmission member 4121, so that the retarder A is disconnected from the motor 411.

The front-drive system A further includes a compressor 416 and a disconnector 417. For example, to ensure independent operation of the compressor 416 and the retarder A, the compressor 416 may be disposed on one side of the retarder A, and the disconnector 417 is disposed between the retarder A and the compressor 416 and is configured to implement a connection or disconnection between the compressor 416 and the motor 411.

In some embodiments, the compressor 416 may be connected to the drive shaft 4125 on the retarder A. Because the drive shaft 4125 is also connected to the transmission member 4121 and the motor 411, the drive shaft 4126 may be simultaneously connected to the motor 411, the transmission member 4121, and the compressor 416. In this case, the motor 411 can simultaneously drive the retarder A and the compressor 416. In an example, the disconnector 417 is disposed between the compressor 416 and the transmission member 4121 in the retarder A. For example, the disconnector 417 is disposed on the drive shaft 4125 and is located in an area between the compressor 416 and the transmission member 4121. If the disconnector 417 is closed, the compressor 416 is connected to the motor 411. If the disconnector 417 is open, the compressor 416 is disconnected from the motor 411.

In some other embodiments, the compressor 416 may alternatively be connected to the drive shaft 4126 on the retarder A, and the disconnector 417 is disposed on the drive shaft 4126 and is located in an area between the compressor 416 and the transmission member 4122 (where the compressor 416 and the disconnector 417 are not shown in the figure). However, in order to implement independent operation of the compressor 416 and the retarder A, the disconnector 413 corresponding to the retarder A in this embodiment may be disposed on the differential 4123.

### Rear-drive system B

The rear-drive system B includes a motor 421, a retarder B, a wheel 406 and a wheel 407. The motor 421 may be connected to the wheel 406 and the wheel 407 by using the retarder B. Torque of the motor 421 may be transmitted to the wheel 406 and the wheel 407 by using the retarder B, to drive the wheel 406 and the wheel 407 to rotate.

The retarder B includes a transmission member 4221 and a transmission member 4222. The transmission member 4221 is connected to the transmission member 4222 and the motor 421. The transmission member 4222 is connected to the wheel 406. Optionally, the retarder B further includes a drive shaft 4225 connected to both the motor 421 and the transmission member 4221. The motor 421 is connected to the transmission member 4221 by using the drive shaft 4225. Optionally, the retarder B further includes a drive shaft 4226 connected to both the transmission member 4221 and the transmission member 4222. The transmission member 4222 is connected to the transmission member 4221 by using the drive shaft 4226. Optionally, the retarder B further includes a differential 4223 disposed on the transmission member 4222. One end of the differential 4223 is connected to the transmission member 4222, and the other end of the differential 4223 is connected to the wheel 406 and the wheel 407.

Optionally, the rear-drive system B further includes a disconnector 423, configured to implement a connection or disconnection between the motor 421 and the retarder B.

In some embodiments, as shown in FIG. 7, the disconnector 423 is disposed between the retarder B and the motor 421. In an example, the disconnector 423 is disposed between the transmission member 4221 and the motor 421. For example, the disconnector 423 is disposed on the drive shaft 4225 and is located in an area between the transmission member 4221 and the motor 421. If the disconnector 423 is closed, the transmission member 4221 is connected to the motor 421, so that the retarder B is connected to the motor 421. If the disconnector 423 is open, the transmission member 4221 is disconnected from the motor 421, so that the retarder B is disconnected from the motor 421.

In some other embodiments, the disconnector 423 is disposed in the retarder B.

In an example, the disconnector 423 (not shown in the figure) is disposed between the transmission member 4221 and the transmission member 4222 in the retarder B. For example, the disconnector 423 is disposed on the drive shaft 4226 and is located in an area between the transmission member 4221 and the transmission member 4222. If the disconnector 423 is closed, the transmission member 4222 is connected to the transmission member 4221. The transmission member 4222 is connected to the motor 421 by using the transmission member 4221, so that the retarder B is connected to the motor 421. If the disconnector 423 is open, the transmission member 4222 is disconnected from the transmission member 4221. The transmission member 4222 is disconnected from the motor 421 by using the transmission member 4221, so that the retarder B is disconnected from the motor 421.

In another example, the disconnector 423 (not shown in the figure) is disposed on the differential 4223 in the retarder B. If the disconnector 423 is closed, the differential 4223 is connected to the transmission member 4222. The differential 4223 is connected to the motor 421 by using the transmission member 4222 and the transmission member 4221, so that the retarder B is connected to the motor 421. If the disconnector 423 is open, the differential 4223 is disconnected from the transmission member 4222. The differential 4223 is disconnected from the motor 421 by using the transmission member 4222 and the transmission member 4221, so that the retarder B is disconnected from the motor 421.

It should be understood that various possible locations of the disconnector 413 and the disconnector 423 in the foregoing examples may be combined with each other. This is not limited in embodiments of this application. For example, the disconnector 413 is disposed between the transmission member 4121 and the transmission member 4122 in the retarder A, and the disconnector 423 is disposed on the differential 4223 in the retarder B.

Still as shown in FIG. 7, the automotive propulsion system 400 further includes a VCU 401, configured to control the front-drive system A and the rear-drive system B, to implement a plurality of propulsion modes of the automotive propulsion system 400 and operation of the compressor. Specifically, the VCU 401 sends an instruction based on a traveling status of the automobile, to control the motor 411 to work or not to work and the disconnector 413 to be closed or opened, and to control the motor 421 to work or not to work and the disconnector 423 to be closed or opened. The VCU 401 sends an instruction based on a usage of the compressor 416, to control the motor 411 to work or not to work and the disconnector 417 to be closed or opened, so as to turn on or turn off the compressor.

Optionally, the automotive propulsion system 400 further includes an MCU 402 corresponding to the front-drive system A and a motor control unit 403 corresponding to the rear-drive system B. The MCU 402 and the MCU 403 are both connected to the VCU 401, to execute the instruction sent by the VCU 401. Specifically, the MCU 402 controls the motor 411, the disconnector 413, and the disconnector 417 in the front-drive system A according to the instruction sent by the VCU 401. The MCU 403 controls the motor 421 and the disconnector 423 in the rear-drive system B according to the instruction sent by the VCU 401.

With reference to the VCU 401, the MCU 402, the MCU 403, the front-drive system A, and the rear-drive system B shown in FIG. 7, the following describes the plurality of propulsion modes of the automotive propulsion system 400 and a working status of the compressor as an example.

### Propulsion mode 1: Both the front-drive system A and the rear-drive system B provide power

In the propulsion mode 1, the motor 411 in the front-drive system A is in a working state, the motor 411 outputs torque to provide power, and the disconnector 413 is closed, so that the motor 411 is connected to the retarder A. The motor 421 in the rear-drive system B is in the working state, the motor 421 outputs torque to provide power, and the disconnector 423 is closed, so that the motor 421 is connected to the retarder B. In this case, the torque output by the motor 411 is transmitted to the wheel 404 and the wheel 405 by using the retarder A, and the torque output by the motor 421 is transmitted to the wheel 406 and the wheel 407 by using the retarder B, so that the automobile travels.

In an implementation, for example, the VCU 401 sends an instruction to the MCU 402 and the MCU 403 based on a traveling status, to indicate the propulsion mode 1. The MCU 402 controls, according to the instruction, the motor 411 to work and the disconnector 413 to be closed. The MCU 403 controls, according to the instruction, the motor 421 to work and the disconnector 423 to be closed.

### Propulsion mode 2: The front-drive system A provides power and the rear-drive system B does not provide power

In the propulsion mode 2, the motor 411 in the front-drive system A is in the working state, the motor 411 outputs torque to provide power, and the disconnector 413 is closed, so that the motor 411 is connected to the retarder A. The motor 421 in the rear-drive system B is in a non-working state, the motor 421 neither outputs torque nor provides power, and the disconnector 423 is open, so that the motor 421 is disconnected from the retarder B. In this case, only the front-drive system A provides power, and the torque output by the motor 411 is transmitted to the wheel 404 and the wheel 405 by using the retarder A, to drive the wheel 406 and the wheel 407 to rotate, so that the automobile travels.

In an implementation, for example, the VCU 401 sends an instruction to the MCU 402 and the MCU 403 based on the traveling status, to indicate the propulsion mode 2. The MCU 402 controls, according to the instruction, the motor 411 to work and the disconnector 413 to be closed. The MCU 203 controls, according to the instruction, the motor 421 not to work and the disconnector 423 to be opened.

If the rear-drive system B does not provide power, because the disconnector 423 is open, the wheel 406 and the wheel 407 are disconnected from the motor 421 in the rear-drive system B, and the torque is not reversely transmitted to the motor 421. Therefore, the motor 421 is not reversely dragged, and an energy loss is reduced.

### Propulsion mode 3: The front-drive system A does not provide power and the rear-drive system B provides power

In the propulsion mode 3, the motor 411 in the front-drive system A is in the non-working state, the motor 211 neither outputs torque nor provides power, and the disconnector 413 is open, so that the motor 411 is disconnected from the retarder A. The motor 421 in the rear-drive system B is in the working state, the motor 421 outputs torque to provide power, and the disconnector 423 is closed, so that the motor 421 is connected to the retarder B. In this case, only the rear-drive system B provides power, and the torque output by the motor 421 is transmitted to the wheel 406 and the wheel 407 by using the retarder B, to drive the wheel 404 and the wheel 405 to rotate, so that the automobile travels.

In an implementation, for example, the VCU 401 sends an instruction to the MCU 402 and the MCU 403 based on the traveling status, to indicate the propulsion mode 3. The MCU 402 controls, according to the instruction, the motor 411 not to work and the disconnector 413 to be opened. The MCU 403 controls, according to the instruction, the motor 421 to work and the disconnector 423 to be closed.

If the front-drive system A does not provide power, because the disconnector 413 is open, the wheel 404 and the wheel 405 are disconnected from the motor 411 in the front-drive system A, and the torque is not reversely transmitted to the motor 411. Therefore, the motor 411 is not reversely dragged, and an energy loss is reduced.

The following describes the working status of the compressor.

### The compressor 416 is working

In this case, the motor 411 is in the working state, and the disconnector 417 is closed, so that the compressor 416 is connected to the motor 411 by using the disconnector 417, the motor 411 provides power for the compressor 416, and the compressor 416 is in the working state.

In an implementation, for example, the VCU 401 sends an instruction to the MCU 402 to instruct to turn on the compressor 416, and the MCU 402 controls, according to the instruction, the motor 411 to work and the disconnector 417 to be closed, so as to turn on the compressor 416.

In the foregoing propulsion mode 1 and propulsion mode 2, the compressor 416 is working during traveling of the automobile, and the motor 411 provides power for both the retarder A and the compressor 416, that is, the compressor 416 and the retarder A share the motor 411. In the foregoing propulsion mode 3, the compressor 416 is working during traveling of the automobile, and the motor 411 provides power only for the compressor 416. When the automobile stops traveling, the motor 411 provides power only for the compressor 416.

### The compressor 416 is not working

In this case, regardless of whether the motor 411 is working, the disconnector 417 is open, so that the compressor 416 is disconnected from the motor 411 by using the disconnector 417, and the compressor 416 stops working.

In an implementation, for example, the VCU 401 sends an instruction to the MCU 402 to instruct to turn off the compressor 416, and the MCU 402 controls, according to the instruction, the disconnector 417 to be opened, so as to turn off the compressor 416.

In the foregoing propulsion mode 1 and propulsion mode 2, the compressor 416 is not working during traveling of the automobile, and the motor 411 provides power only for the retarder A.

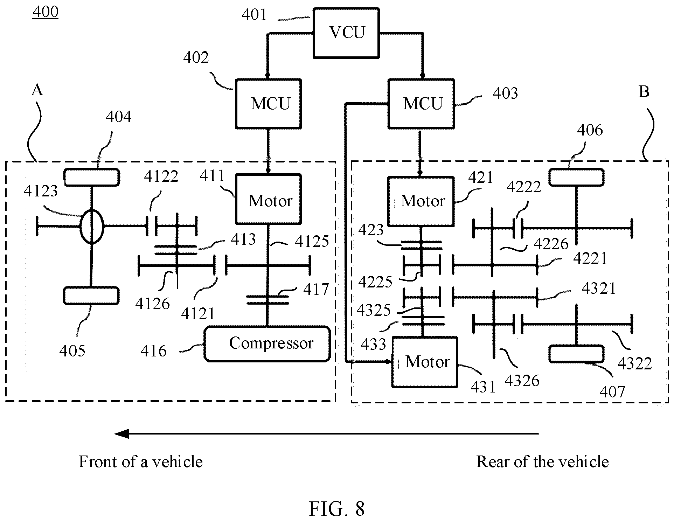

FIG. 8 is another schematic diagram of a structure of an automotive propulsion system 400 according to an embodiment of this application. A front-drive system A of the automotive propulsion system 400 is similar to the front-drive system A in FIG. 7, and details are not described again. A rear-drive system B of the automotive propulsion system 400 include two motors. Each motor corresponds to one retarder and one wheel, and each motor can output torque, and provide power for a wheel by using a corresponding retarder. The following describes the rear-drive system B.

The rear-drive system B includes a motor 421, a retarder B, a motor 341, a retarder C, a wheel 406, and a wheel 407. The motor 421 may be connected to the wheel 406 by using the retarder B, and torque of the motor 421 may be transmitted to the wheel 406 by using the retarder B. The motor 431 may be connected to the wheel 407 by using the retarder C, and torque of the motor 431 may be transmitted to the wheel 407 by using the retarder C.

The retarder B includes a transmission member 4221 and a transmission member 4222. The transmission member 4221 is connected to the transmission member 4222 and the motor 421. The transmission member 4222 is connected to the wheel 406. Optionally, the retarder B further includes a drive shaft 4225 connected to both the motor 421 and the transmission member 4221. The motor 421 is connected to the transmission member 4221 by using the drive shaft 4225. Optionally, the retarder A further includes a drive shaft 4226 connected to both the transmission member 4221 and the transmission member 4222. The transmission member 4222 is connected to the transmission member 4221 by using the drive shaft 4226.

Optionally, the rear-drive system B further includes a disconnector 423, configured to implement a connection or disconnection between the motor 421 and the retarder B.

In some embodiments, as shown in FIG. 8, the disconnector 423 is disposed between the retarder B and the motor 421. In an example, the disconnector 423 is disposed between the transmission member 4221 and the motor 421. For example, the disconnector 423 is disposed on the drive shaft 4225 and is located in an area between the transmission member 4221 and the motor 421. If the disconnector 423 is closed, the transmission member 4221 is connected to the motor 421, so that the retarder B is connected to the motor 421. If the disconnector 423 is open, the transmission member 4221 is disconnected from the motor 421, so that the retarder B is disconnected from the motor 421.

In some other embodiments, the disconnector 423 is disposed in the retarder B. In an example, the disconnector 423 (not shown in the figure) is disposed between the transmission member 4221 and the transmission member 4222 in the retarder B. For example, the disconnector 423 is disposed on the drive shaft 4226 and is located in an area between the transmission member 4221 and the transmission member 4222. If the disconnector 423 is closed, the transmission member 4222 is connected to the transmission member 4221. The transmission member 4222 is connected to the motor 421 by using the transmission member 4221, so that the retarder B is connected to the motor 421. If the disconnector 423 is open, the transmission member 4222 is disconnected from the transmission member 4221. The transmission member 4222 is disconnected from the motor 421 by using the transmission member 4221, so that the retarder B is disconnected from the motor 421.

The retarder C includes a transmission member 4321 and a transmission member 4322. The transmission member 4321 is connected to the transmission member 4322 and the motor 431. The transmission member 4322 is connected to the wheel 407. Optionally, the retarder C further includes a drive shaft 4325 connected to both the motor 431 and the transmission member 4321. The motor 431 is connected to the transmission member 4321 by using the drive shaft 4325. Optionally, the retarder C further includes a drive shaft 4326 connected to both the transmission member 4321 and the transmission member 4322. The transmission member 4321 is connected to the transmission member 4322 by using the drive shaft 4326.

Optionally, the rear-drive system B further includes a disconnector 433, configured to implement a connection or disconnection between the motor 431 and the retarder C.

In some embodiments, as shown in FIG. 8, the disconnector 433 is disposed between the retarder C and the motor 431. In an example, the disconnector 433 is disposed between the transmission member 4321 and the motor 431. For example, the disconnector 433 is disposed on the drive shaft 4325 and is located in an area between the transmission member 4321 and the motor 431. If the disconnector 433 is closed, the transmission member 4321 is connected to the motor 431, so that the retarder C is connected to the motor 431. If the disconnector 433 is open, the transmission member 4321 is disconnected from the motor 431, so that the retarder C is disconnected from the motor 431.

In some other embodiments, the disconnector 433 is disposed in the retarder C. In an example, the disconnector 433 (not shown in the figure) is disposed between the transmission member 4321 and the transmission member 4322 in the retarder C. For example, the disconnector 433 is disposed on the drive shaft 4326 and is located in an area between the transmission member 4321 and the transmission member 4322. If the disconnector 433 is closed, the transmission member 4322 is connected to the transmission member 4321. The transmission member 4322 is connected to the motor 431 by using the transmission member 4321, so that the retarder C is connected to the motor 431. If the disconnector 433 is open, the transmission member 4322 is disconnected from the transmission member 4321. The transmission member 4322 is disconnected from the motor 431 by using the transmission member 4321, so that the retarder C is disconnected from the motor 431.

It should be understood that various possible locations of the disconnector 413, the disconnector 423, and the disconnector 433 in the foregoing examples may be combined with each other. This is not limited in embodiments of this application. For example, the disconnector 413 is disposed between the transmission member 4121 and the transmission member 4122 in the retarder A, the disconnector 423 is disposed on the differential 4223 in the retarder B, and the disconnector 433 is disposed between the transmission member 4321 and the transmission member 4322 in the retarder C.

Still as shown in FIG. 8, the automotive propulsion system 400 further includes a VCU 401, configured to control the front-drive system A and the rear-drive system B, to implement a plurality of propulsion modes of the automotive propulsion system 400 and operation of the compressor 416. Specifically, the VCU 401 sends an instruction based on a traveling status of an automobile, to control the motor 411 to work or not to work and the disconnector 413 to be closed or opened, to control the motor 431 to work or not to work and the disconnector 433 to be closed or opened, and to control the motor 421 to work or not to work and the disconnector 423 to be closed or opened. The VCU 401 sends an instruction based on a usage of the compressor 416, to control the motor 411 to work or not to work and the disconnector 417 to be closed or opened, so as to turn on or stop the compressor.

Optionally, the automotive propulsion system 400 further includes an MCU 402 corresponding to the front-drive system A and a motor control unit 403 corresponding to the rear-drive system B. The MCU 402 and the MCU 403 are both connected to the VCU 301, to execute the instruction sent by the VCU 401. Specifically, the MCU 402 controls the motor 411, the disconnector 413, and the disconnector 417 in the front-drive system A according to the instruction sent by the VCU 401. The MCU 403 controls the motor 421, the motor 431, the disconnector 423, and the disconnector 433 in the rear-drive system B according to the instruction sent by the VCU 401.

With reference to the VCU 401, the MCU 402, the MCU 403, the front-drive system A, and the rear-drive system B shown in FIG. 8, the following describes a plurality of propulsion modes of the automotive propulsion system 400 as an example. For a specific description of the working status of the compressor, reference may be made to the related description of the automotive propulsion system 400 in FIG. 7. Details are not described again.

### Propulsion mode 1: Both the front-drive system A and the rear-drive system B provide power

In the propulsion mode 1, the motor 411 in the front-drive system A is in a working state, the motor 411 outputs torque to provide power, and the disconnector 413 is closed, so that the motor 411 is connected to the retarder A. The motor 421 and the motor 431 in the rear-drive system B are in the working state. The motor 421 outputs torque to provide power, and the disconnector 423 is closed, so that the motor 421 is connected to the retarder B. The motor 431 outputs torque to provide power, and the disconnector 433 is closed, so that the motor 431 is connected to the retarder C. In this case, the torque output by the motor 411 is transmitted to the wheel 404 and the wheel 405 by using the retarder A, the torque output by the motor 421 is transmitted to the wheel 406 by using the retarder B, and the torque output by the motor 431 is transmitted to the wheel 407 by using the retarder C, so that the automobile travels.

In an implementation, for example, the VCU 401 sends an instruction to the MCU 402 and the MCU 403 based on a traveling status, to indicate the propulsion mode 1. The MCU 402, controls, according to the instruction, the motor 411 to work and the disconnector 413 to be closed. The MCU 303 controls, according to the instruction, the motor 421 to work and the disconnector 423 to be closed, and controls the motor 431 to work and the disconnector 433 to be closed.

### Propulsion mode 2: The front-drive system A provides power and the rear-drive system B does not provide power

In the propulsion mode 2, the motor 411 in the front-drive system A is in a working state, the motor 411 outputs torque to provide power, and the disconnector 413 is closed, so that the motor 411 is connected to the retarder A. The motor 421 and the motor 431 in the rear-drive system B are in the non-working state. The motor 421 neither outputs torque nor provides power, and the disconnector 423 is open, so that the motor 421 is disconnected from the retarder B. The motor 431 neither outputs torque nor provides power, and the disconnector 433 is open, so that the motor 431 is disconnected from the retarder C. In this case, only the front-drive system A provides power, and the torque output by the motor 411 is transmitted to the wheel 404 and the wheel 405 by using the retarder A, to drive the wheel 406 and the wheel 407 to rotate, so that the automobile travels.

In an implementation, for example, the VCU 401 sends an instruction to the MCU 402 and the MCU 403 based on the traveling status, to indicate the propulsion mode 2. The MCU 402, controls, according to the instruction, the motor 411 to work and the disconnector 413 to be closed. The MCU 403 controls, according to the instruction, the motor 421 not to work and the disconnector 423 to be opened, and controls the motor 431 not to work and the disconnector 433 to be opened.

If the rear-drive system B does not provide power, because the disconnector 423 and the disconnector 433 are open, the wheel 406 is disconnected from the motor 421 in the rear-drive system B, the wheel 407 is disconnected from the motor 431 in the rear-drive system B, and torque is not reversely transmitted to the motor 421 and the motor 431. Therefore, the motor 421 and the motor 431 are not reversely dragged, and an energy loss is reduced.

### Propulsion mode 3: The front-drive system A does not provide power and the rear-drive system B provides power

In the propulsion mode 3, the motor 411 of the front-drive system A is in a non-working state, the motor 411 neither outputs torque nor provides power, and the disconnector 413 is open, so that the motor 411 is disconnected from the retarder A. The motor 421 and the motor 431 in the rear-drive system B are in a working state, the motor 421 outputs torque to provide power, and the disconnector 423 is closed, so that the motor 421 is connected to the retarder B. The motor 431 outputs torque to provide power, and the disconnector 433 is closed, so that the motor 431 is connected to the retarder C. In this case, only the rear-drive system B provides power, the torque output by the motor 421 is transmitted to the wheel 406 by using the retarder A, the torque output by the motor 431 is transmitted to the wheel 407 by using the retarder C, to drive the wheel 404 and the wheel 405 to rotate, so that the automobile travels.

In an implementation, for example, the VCU 401 sends an instruction to the MCU 402 and the MCU 403 based on the traveling status, to indicate the propulsion mode 3. The MCU 402, controls, according to the instruction, the motor 411 not to work and the disconnector 413 to be opened. The MCU 403 controls, according to the instruction, the motor 421 to work and the disconnector 423 to be closed, and controls the motor 431 to work and the disconnector 433 to be closed.

If the front-drive system A does not provide power, because the disconnector 413 is open, the wheel 404 and the wheel 405 are disconnected from the motor 411, and the torque is not reversely transmitted to the motor 411. Therefore, the motor 411 is not reversely dragged, and an energy loss is reduced.

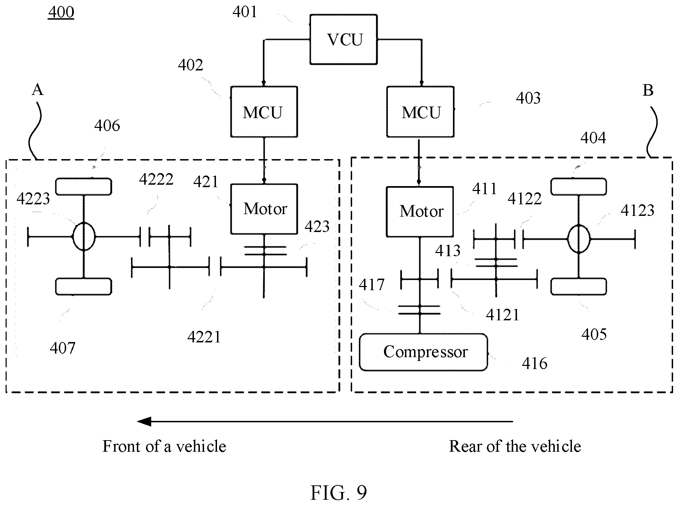

FIG. 9 is another schematic diagram of a structure of an automotive propulsion system 400 according to an embodiment of this application. A difference from FIG. 7 lies in that a front-drive system A in FIG. 9 is equivalent to the rear-drive system B in FIG. 7, includes a motor 421, a retarder B, a wheel 406, and a wheel 407, and alternatively includes a disconnector 423. A rear-drive system B in FIG. 9 is equivalent to the front-drive system A in FIG. 7, and includes a motor 411, a retarder A, a disconnector 413, a compressor 416, a disconnector 417, a wheel 404, and a wheel 405. For specific descriptions, refer to the related descriptions of FIG. 7. For brevity, details are not described herein again.

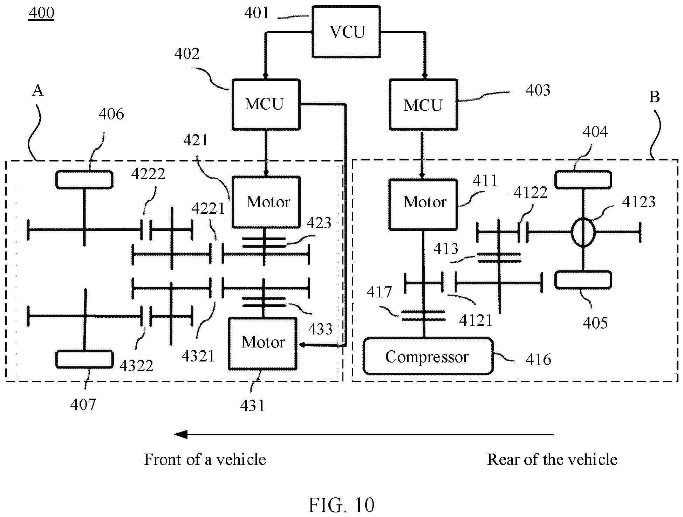

FIG. 10 is another schematic diagram of a structure of an automotive propulsion system 400 according to an embodiment of this application. A difference from FIG. 8 lies in that a front-drive system A in FIG. 10 is equivalent to a rear-drive system B in FIG. 8, includes a motor 421, a retarder B, a motor 431, a retarder C, a wheel 406, and a wheel 407, and alternatively includes a disconnector 423 and/or a disconnector 433. Arear-drive system B in FIG. 10 is equivalent to the front-drive system A in FIG. 8, and includes a motor 411, a retarder A, a disconnector 413, a compressor 416, a disconnector 417, a wheel 404, and a wheel 405. For specific descriptions, refer to the related descriptions of FIG. 8. For brevity, details are not described herein again.

In the automotive propulsion system provided in this embodiment of this application, first, a motor, a retarder, and a compressor are disposed in the front-drive system (or the rear-drive system). Both the compressor and the retarder are connected to the motor, and may share the motor (or a power source). This saves a motor specifically used for the compressor, reduces a weight and costs of an automobile, and helps improve use efficiency of the motor, to save energy. Second, disconnectors are separately configured for the compressor and the retarder. Closing or opening of the two disconnectors is controlled, so that the retarder and the compressor can independently operate, and do not affect each other. Third, when the front-drive system (or the rear-drive system) does not provide power, a disconnector corresponding to the retarder is opened, to prevent the motor in the front-drive system (or the rear-drive system) from being reversely dragged. This reduces an energy loss.

In a structure including a disconnector in the rear-drive system (or the front-drive system), when the rear-drive system (or the front-drive system) does not provide power, the disconnector is opened, to prevent the motor in the rear-drive system (or the front-drive system) from being reversely dragged. This reduces the energy loss.

An embodiment of this application provides an automotive propulsion system. The automotive propulsion system may correspond to the automotive propulsion system 400 shown in FIG. 7 to FIG. 10.

The automotive propulsion system includes a first propulsion system and a second propulsion system. The first propulsion system includes: a first motor, a first retarder, a first disconnector, a compressor, and a second disconnector. The first motor may be connected to the first retarder and the compressor. The first disconnector is disposed in the first retarder, and is configured to implement a connection or disconnection between the first motor and the first retarder. The second disconnector is disposed between the first retarder and the compressor and is configured to implement a connection or disconnection between the first motor and the compressor. The second propulsion system includes a second motor and a second retarder, and the second motor is connected to the second retarder.

In some embodiments, the first propulsion system is the front-drive system, the second propulsion system is the rear-drive system, and the front-drive system and the rear-drive system may be the front-drive system and the rear-drive system of the automotive propulsion system 400 corresponding to FIG. 7 and FIG. 8. In some other embodiments, the first propulsion system is the rear-drive system, the second propulsion system is the front-drive system. The front-drive system and the rear-drive system may be the front-drive system and the rear-drive system of the automotive propulsion system 400 corresponding to FIG. 9 and FIG. 10.

For ease of description, FIG. 7 and FIG. 8 are used as examples to describe the automotive propulsion system in this embodiment of this application.

Refer to the embodiments corresponding to FIG. 7 and FIG. 8. the first motor may be a motor 411, the first retarder may be a retarder A, the first disconnector may be a disconnector 413, the compressor may be a compressor 416, the second disconnector may be a disconnector 417, the second motor may be a motor 421, and the second retarder may be a retarder B.

The first motor may be connected to the first retarder, so that torque output by the first motor is transmitted to the first retarder, and then transmitted to a wheel connected to the first retarder, to drive the wheel to rotate. The first motor may be connected to the compressor, to transmit the torque output by the first motor to the compressor, so that the compressor works and implements cooling or heating. It can be learned that, in this structure, the first retarder and the compressor may share the first motor, that is, the first motor may simultaneously provide power for the first retarder and the compressor. This saves a motor specifically used for the compressor, reduces a weight and costs of the automobile, and helps improve use efficiency of the motor, to save energy.

The first disconnector is configured for the first retarder, and the second disconnector is configured for the compressor, so as to implement independent operation of the compressor and the first retarder, preventing the first motor from being reversely dragged when the first propulsion system does not provide power. The first disconnector is disposed in the first retarder, and is configured to implement a connection or disconnection between the first motor and the first retarder. If the first disconnector is open, the first retarder is disconnected from the first motor. If the first disconnector is closed, the first retarder is connected to the first motor. The second disconnector is disposed between the first retarder and the first motor, and is configured to implement a connection or disconnection between the first motor and the compressor. If the second disconnector is closed, the compressor is connected to the first motor. If the second disconnector is open, the compressor is disconnected from the first motor.

The automotive propulsion system in this embodiment of this application further includes a controller, configured to control the first propulsion system and the second propulsion system, to implement a plurality of propulsion modes of the automotive propulsion system and operation of the compressor. The propulsion mode includes at least a first propulsion mode, a second propulsion mode, and a third propulsion mode. For example, the controller includes a vehicle control unit, and may further include a first motor control unit corresponding to the first propulsion system and a second motor control unit corresponding to the second propulsion system. The first motor control unit and the second motor control unit may be configured to respectively control the first propulsion system and the second propulsion system according to an instruction sent by the vehicle control unit.

The following describes the propulsion modes.

The first propulsion mode: The first motor is in a working state, the first disconnector connects the first motor to the first retarder, and torque of the first motor is transmitted by using the first retarder. The second motor is in the working state, and torque of the second motor is transmitted by using the second retarder. For example, in an implementation, the vehicle control unit sends an instruction to the first motor control unit and the second motor control unit based on a traveling status of the automobile, to indicate the first propulsion mode. The first motor control unit controls the first motor to work and the first disconnector to be closed, to connect the first motor to the first retarder. The second motor control unit controls the second motor to work.

The second propulsion mode: The first motor is in the working state, the first disconnector connects the first motor to the first retarder, and torque of the first motor is transmitted by using the first retarder. The second motor is in a non-working state. For example, in an implementation, the vehicle control unit sends an instruction to the first motor control unit and the second motor control unit based on the traveling status of the automobile, to indicate the second propulsion mode. The first motor control unit controls the first motor to work and the first disconnector to be closed, to connect the first motor to the first retarder. The second motor control unit controls the second motor not to work.

The third propulsion mode: The first motor is in the non-working state, and the first disconnector disconnects the first motor from the first retarder. The second motor is in the working state, and torque of the second motor is transmitted by using the second retarder. For example, in an implementation, the vehicle control unit sends an instruction to the first motor control unit and the second motor control unit based on the traveling status of the automobile, to indicate the third propulsion mode. The first motor control unit controls the first motor not to work and the first disconnector to be opened, to disconnect the first motor from the first retarder. The second motor control unit controls the second motor to work.

The following describes the working status of the compressor.

The compressor is working: The first motor is in the working state, and the second disconnector is closed. Therefore, the compressor is connected to the first motor by using the second disconnector, the torque output by the first motor is transmitted to the compressor, and the compressor is in the working state. For example, in an implementation, the vehicle control unit may send an instruction to the first motor control unit to instruct to turn on the compressor, and the first motor control unit controls starting of the first motor and closing of the second disconnector.

In the first propulsion mode and the second propulsion mode, the compressor is working during traveling of the automobile, and the first motor provides power for both the first retarder and the compressor, that is, the compressor and the first retarder share the first motor. In the third propulsion mode, the compressor is working during traveling of the automobile, and the first motor provides power only for the compressor. When the automobile stops traveling, the first motor provides power only for the compressor.

The compressor is not working: Regardless of whether the first motor is in any state, the second disconnector is open, and the compressor is disconnected from the first motor by using the second disconnector. For example, in an implementation, the vehicle control unit may send an instruction to the first motor control unit to instruct to turn off the compressor, and the first motor control unit controls opening of the second disconnector.

In the first propulsion mode and the second propulsion mode, the compressor is not working during traveling of the automobile, and the first motor provides power only for the first retarder.

In the automotive propulsion system provided in this embodiment of this application, the first motor, the first retarder, and the compressor are disposed in the first propulsion system. Both the compressor and the first retarder are connected to the first motor, and may share the first motor (or a power source). This saves a motor specifically used for the compressor, reduces the weight and the costs of the automobile, and helps improve use efficiency of the motor, to save energy. The first disconnector is configured for the first retarder and the second disconnector is configured for the compressor. Closing or opening of the first disconnector and closing or opening of the second disconnector are controlled, so that the first retarder and the compressor can independently operate, and do not affect each other. The first disconnector is configured for the first retarder. Therefore, when the first propulsion system does not provide power, the first disconnector is opened, to prevent the first motor in the first propulsion system from being reversely dragged. This reduces an energy loss.

For example, for the first disconnector in this embodiment of this application, there may be the following designs.

In some embodiments, the first retarder includes a third transmission member and a fourth transmission member. The fourth transmission member is connected to the first motor by using the third transmission member. The first disconnector is disposed between the third transmission member and the fourth transmission member. As shown in FIG. 7 and FIG. 8, the third transmission member may be the transmission member 4121, the fourth transmission member may be the transmission member 4122, and the disconnector 413 is disposed between the transmission member 4121 and the transmission member 4122. For specific descriptions of this embodiment, refer to the foregoing descriptions. Details are not described again.

In some other embodiments, the first retarder includes a second differential. The second differential is connected to the first motor, and the first disconnector is disposed on the second differential. The second differential may be connected to the first motor by using the third transmission member and the fourth transmission member. As shown in FIG. 7 and FIG. 8, the second differential may be the differential 4123, and the disconnector 413 is disposed on the differential 4123. For specific descriptions of this embodiment, refer to the foregoing descriptions. Details are not described again.

For example, for the second disconnector in this embodiment of this application, there may be the following designs.

In some embodiments, the first retarder includes a third transmission member. The third transmission member is connected to the first motor. The second disconnector is disposed between the third transmission member and the compressor. As shown in FIG. 7 and FIG. 8, the third transmission member may be the transmission member 4121, and the disconnector 417 is disposed between the compressor 416 and the transmission member 4121. For specific descriptions of this embodiment, refer to the foregoing descriptions. Details are not described again.

Optionally, the second propulsion system further includes a third disconnector, disposed between the second motor and the second retarder, or in the second retarder. As shown in FIG. 7 and FIG. 8, the third disconnector may be the disconnector 423.

For example, for the third disconnector in this embodiment of this application, there may be the following designs.

In some embodiments, the third disconnector is disposed between the second motor and the second retarder. The second retarder includes a first transmission member. The first transmission member is connected to the second motor. The third disconnector is disposed between the first transmission member and the second motor. As shown in FIG. 7 and FIG. 8, the first transmission member may be the transmission member 4221, and the disconnector 423 is disposed between the motor 421 and the transmission member 4221. For specific descriptions of this embodiment, refer to the foregoing descriptions. Details are not described again.

In some other embodiments, the third disconnector is disposed in the second retarder. The second retarder includes a first transmission member and a second transmission member. The second transmission member is connected to the second motor by using the first transmission member. The third disconnector is disposed between the first transmission member and the second transmission member. As shown in FIG. 7 and FIG. 8, the first transmission member may be the transmission member 4221, the second transmission member may be the transmission member 4222, and the disconnector 423 is disposed between the transmission member 4222 and the transmission member 4221. For specific descriptions of this embodiment, refer to the foregoing descriptions. Details are not described again.

In some other embodiments, the third disconnector is disposed in the second retarder. The second retarder includes a first differential. The first differential is connected to the second motor, and the third disconnector is disposed on the first differential. The first differential may be connected to the second motor by using the first transmission member and the second transmission member. As shown in FIG. 7, the first differential may be the differential 4223, and the disconnector 423 is disposed on the differential 4223. For specific descriptions of this embodiment, refer to the foregoing descriptions, and details are not described again.

In an embodiment in which the second propulsion system includes the third disconnector, propulsion modes of the automotive propulsion system is as follows.

The first propulsion mode: The first motor is in a working state, the first disconnector connects the first motor to the first retarder, and torque of the first motor is transmitted by using the first retarder. The second motor is in the working state, the third disconnector connects the second motor to the second retarder, and torque of the second motor is transmitted by using the second retarder. For example, in an implementation, the vehicle control unit sends an instruction to the first motor control unit and the second motor control unit based on a traveling status of the automobile, to indicate the first propulsion mode. The first motor control unit controls the first motor to work and the first disconnector to be closed, to connect the first motor to the first retarder. The second motor control unit controls the second motor to work and the third disconnector to be closed, to connect the second motor to the second retarder.

The second propulsion mode: the first motor is in the working state, the first disconnector connects the first motor to the first retarder, torque of the first motor is transmitted by using the first retarder, the second motor is in a non-working state, and the third disconnector disconnects the second motor from the second retarder. For example, in an implementation, the vehicle control unit sends an instruction to the first motor control unit and the second motor control unit based on the traveling status of the automobile, to indicate the second propulsion mode. The first motor control unit controls the first motor to work and the first disconnector to be closed, to connect the first motor to the first retarder. The second motor control unit controls the second motor not to work and the third disconnector to be opened, to disconnect the second motor from the second retarder.

The third propulsion mode: The first motor is in the non-working state, and the first disconnector disconnects the first motor from the first retarder. The second motor is in the working state, the third disconnector connects the second motor to the second retarder, and torque of the second motor is transmitted by using the second retarder. For example, in an implementation, the vehicle control unit sends an instruction to the first motor control unit and the second motor control unit based on the traveling status of the automobile, to indicate the third propulsion mode. The first motor control unit controls the first motor not to work and the first disconnector to be opened, to disconnect the first motor from the first retarder. The second motor control unit controls the second motor to work and the third disconnector to be closed, to connect the first motor to the first retarder.

Optionally, the second propulsion system further includes a third motor and a third retarder, where the third motor is connected to the third retarder.

Optionally, the second propulsion system further includes a fourth disconnector, disposed between the third motor and the third retarder, or in the third retarder.

Refer to the embodiment corresponding to FIG. 8. The third motor may be the motor 431, the third retarder may be the retarder C, and the fourth disconnector may be the disconnector 433.

For example, for the fourth disconnector in this embodiment of this application, there may be the following designs.

In some embodiments, the fourth disconnector is disposed between the third motor and the third retarder. The third retarder includes a fifth transmission member. The fifth transmission member is connected to the third motor. The fourth disconnector is disposed between the third transmission member and the third motor. As shown in FIG. 8, the fifth transmission member may be the transmission member 4321, and the disconnector 433 is disposed between the motor 431 and the transmission member 4321. For specific descriptions of this embodiment, refer to the foregoing descriptions. Details are not described again.

In some other embodiments, the fourth disconnector is disposed in the third retarder. The third retarder includes a fifth transmission member and a sixth transmission member. The sixth transmission member is connected to the third motor by using the fifth transmission member. The fourth disconnector is disposed between the fifth transmission member and the sixth transmission member. As shown in FIG. 8, the fifth transmission member may be the transmission member 4321, the sixth transmission member may be the transmission member 4322, and the disconnector 433 is disposed between the transmission member 4322 and the transmission member 4321. For specific descriptions of this embodiment, refer to the foregoing descriptions. Details are not described again.

In an embodiment in which the second propulsion system includes the third disconnector and the fourth disconnector, propulsion modes of the automotive propulsion system is as follows.

The first propulsion mode: The first motor is in a working state, the first disconnector connects the first motor to the first retarder, and torque of the first motor is transmitted by using the first retarder. The second motor is in a working state, the third disconnector connects the second motor to the second retarder, and torque of the second motor is transmitted by using the second retarder. The third motor is in the working state, the fourth disconnector connects the third motor to the third retarder, and torque of the third motor is transmitted by using the third retarder. For example, in an implementation, the vehicle control unit sends an instruction to the first motor control unit and the second motor control unit based on a traveling status of the automobile, to indicate the first propulsion mode. The first motor control unit controls the first motor to work and the first disconnector to be closed, to connect the first motor to the first retarder. The second motor control unit controls the second motor to work and the third disconnector to be closed, to connect the second motor to the second retarder, and controls the third motor to work and the fourth disconnector to be closed, to connect the third motor to the third retarder.

The second propulsion mode: The first motor is in the working state, the first disconnector connects the first motor to the first retarder, and torque of the first motor is transmitted by using the first retarder. The second motor is in a non-working state, and the third disconnector disconnects the second motor from the second retarder. The third motor is in the non-working state, and the fourth disconnector disconnects the third motor from the third retarder. For example, in an implementation, the vehicle control unit sends an instruction to the first motor control unit and the second motor control unit based on the traveling status of the automobile, to indicate the second propulsion mode. The first motor control unit controls the first motor to work and the first disconnector to be closed, to connect the first motor to the first retarder. The second motor control unit controls the second motor not to work and the third disconnector to be opened, to disconnect the second motor from the second retarder, and controls the third motor not to work and the fourth disconnector to be opened, to disconnect the third motor from the third retarder.

The third propulsion mode: The first motor is in the non-working state, and the first disconnector disconnects the first motor from the first retarder. The second motor is in the working state, the third disconnector connects the second motor to the second retarder, torque of the second motor is transmitted by using the second retarder. The third motor is in the working state, the fourth disconnector connects the third motor to the third retarder, and torque of the third motor is transmitted by using the third retarder. For example, in an implementation, the vehicle control unit sends an instruction to the first motor control unit and the second motor control unit based on the traveling status of an automobile, to indicate the third propulsion mode. The first motor control unit controls the first motor not to work and the first disconnector to be opened, to disconnect the first motor from the first retarder. The second motor control unit controls the second motor to work and the third disconnector to be closed, to connect the second motor to the second retarder, and controls the third motor to work and the fourth disconnector to be closed, to connect the third motor to the third retarder.

An embodiment of this application provides another automotive propulsion system. The automotive propulsion system may correspond to the automotive propulsion system 300 shown in FIG. 4 to FIG. 6.

The automotive propulsion system includes a first propulsion system and a second propulsion system. The first propulsion system includes: a first motor, a first retarder, a first disconnector, a third motor, a third retarder, and a third disconnector. The first disconnector is disposed between the first motor and the first retarder, or in the first retarder. The third disconnector is disposed between the third motor and the third retarder, or in the third retarder. The second propulsion system includes a second motor, a second retarder, and a second disconnector. The second disconnector is disposed between the second motor and the second retarder, or in the second retarder.

In some embodiments, the first propulsion system is the front-drive system, the second propulsion system is the rear-drive system, and the front-drive system and the rear-drive system may be the front-drive system and the rear-drive system of the automotive propulsion system 400 corresponding to FIG. 4 and FIG. 6. In some other embodiments, the first propulsion system is the rear-drive system, the second propulsion system is the front-drive system. The front-drive system and the rear-drive system may be the front-drive system and the rear-drive system of the automotive propulsion system 400 corresponding to FIG. 5 and FIG. 6.

The automotive propulsion system 300 shown in FIG. 4 is used as an example. The first motor may be the motor 311, the first retarder may be the retarder A, the first disconnector may be the disconnector 313, the third motor may be the motor 331, the third retarder may be the retarder C, and the third disconnector may be the disconnector 333. For specific descriptions of the components, refer to the foregoing descriptions of the automotive propulsion system 300 shown in FIG. 4. Details are not described again.

The automotive propulsion system in this embodiment of this application further includes a controller. The controller is configured to control the automotive propulsion system to execute a first propulsion mode, a second propulsion mode, or a third propulsion mode. The following describes three propulsion modes.

The first propulsion mode: The first motor is in a working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in the working state, the second disconnector connects the second motor to the second retarder, and torque of the second motor is transmitted by using the second retarder. For example, in an implementation, the vehicle control unit sends an instruction to the first motor control unit and the second motor control unit based on the traveling status of the automobile, to indicate the first propulsion mode. The first motor control unit controls the first motor to work and the first disconnector to be closed, to connect the first motor to the first retarder, and controls the third motor to work and the third disconnector to be closed, to connect the third motor to the third retarder. The second motor control unit controls the second motor to work and the second disconnector to be closed, to connect the second motor to the second retarder.

The second propulsion mode: The first motor is in the working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in a non-working state, and the second disconnector disconnects the second motor from the second retarder. For example, in an implementation, the vehicle control unit sends an instruction to the first motor control unit and the second motor control unit based on the traveling status of the automobile, to indicate the second propulsion mode. The first motor control unit controls the first motor to work and the first disconnector to be closed, to connect the first motor to the first retarder, and controls the third motor to work and the third disconnector to be closed, to connect the third motor to the third retarder. The second motor control unit controls the second motor not to work and the second disconnector to be opened, to disconnect the second motor from the second retarder.

The third propulsion mode: The first motor is in the non-working state, and the first disconnector disconnects the first motor from the first retarder. The third motor is in the non-working state, and the third disconnector disconnects the third motor from the third retarder. The second motor is in the working state, the second disconnector connects the second motor to the second retarder, and torque of the second motor is transmitted by using the second retarder. For example, in an implementation, the vehicle control unit sends an instruction to the first motor control unit and the second motor control unit based on the traveling status of the automobile, to indicate the first propulsion mode. The first motor control unit controls the first motor not to work and the first disconnector to be opened, to disconnect the first motor from the first retarder, and controls the third motor not to work and the third disconnector to be opened, to disconnect the third motor from the third retarder. The second motor control unit controls the second motor to work and the second disconnector to be closed, to connect the second motor to the second retarder.

Optionally, the second propulsion system further includes a fourth motor, a fourth retarder, and a fourth disconnector. The fourth disconnector is disposed between the fourth motor and the fourth retarder, or in the fourth retarder.

This embodiment may correspond to the automotive propulsion system 300 shown in FIG. 6. The second propulsion system is the rear-drive system, the fourth motor may be the motor 341, the fourth retarder may be the retarder D, and the fourth disconnector may be the disconnector 343. For a specific description of this embodiment, refer to the foregoing description of the automotive propulsion system 300 shown in FIG. 6. Details are not described again.

In an embodiment in which the second propulsion system further includes a fourth motor, a fourth retarder, and a fourth disconnector, propulsion modes are as follows:

The first propulsion mode: The first motor is in a working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in the working state, the second disconnector connects the second motor to the second retarder, and torque of the second motor is transmitted by using the second retarder. The fourth motor is in the working state, the fourth disconnector connects the fourth motor to the fourth retarder, and torque of the fourth motor is transmitted by using the fourth retarder. For example, in an implementation, the vehicle control unit sends an instruction to the first motor control unit and the second motor control unit based on the traveling status of the automobile, to indicate the first propulsion mode. The first motor control unit controls the first motor to work and the first disconnector to be closed, to connect the first motor to the first retarder, and controls the third motor to work and the third disconnector to be closed, to connect the third motor to the third retarder. The second motor control unit controls the second motor to work and the second disconnector to be closed, to connect the second motor to the second retarder, and controls the fourth motor to work and the fourth disconnector to be closed, to connect the fourth motor to the fourth retarder.

The second propulsion mode: The first motor is in the working state, the first disconnector connects the first motor to the first retarder, and torque of the first motor is transmitted by using the first retarder. The third motor is in the working state, the third disconnector connects the third motor to the third retarder, and torque of the third motor is transmitted by using the third retarder. The second motor is in a non-working state, and the second disconnector disconnects the second motor from the second retarder. The fourth motor is in the non-working state, and the fourth disconnector disconnects the fourth motor from the fourth retarder. For example, in an implementation, the vehicle control unit sends an instruction to the first motor control unit and the second motor control unit based on the traveling status of an automobile, to indicate the second propulsion mode. The first motor control unit controls the first motor to work and the first disconnector to be closed, to connect the first motor to the first retarder, and controls the third motor to work and the third disconnector to be closed, to connect the third motor to the third retarder. The second motor control unit controls the second motor not to work and the second disconnector to be opened, to disconnect the second motor from the second retarder, and controls the fourth motor not to work and the fourth disconnector to be opened, to disconnect the fourth motor from the fourth retarder.

The third propulsion mode: The first motor is in the non-working state, and the first disconnector disconnects the first motor from the first retarder. The third motor is in the non-working state, and the third disconnector disconnects the third motor from the third retarder. The second motor is in the working state, the second disconnector connects the second motor to the second retarder, and torque of the second motor is transmitted by using the second retarder. The fourth motor is in the working state, the fourth disconnector connects the fourth motor to the fourth retarder, and torque of the fourth motor is transmitted by using the fourth retarder. For example, in an implementation, the vehicle control unit sends an instruction to the first motor control unit and the second motor control unit based on the traveling status of the automobile, to indicate the third propulsion mode. The first motor control unit controls the first motor not to work and the first disconnector to be opened, to disconnect the first motor from the first retarder, and controls the third motor not to work and the third disconnector to be opened, to disconnect the third motor from the third retarder. The second motor control unit controls the second motor to work and the second disconnector to be closed, to connect the second motor to the second retarder, and controls the fourth motor to work and the fourth disconnector to be closed, to connect the fourth motor to the fourth retarder.

A person skilled in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It should be noted that the terms "first" and "second" are merely intended for a purpose of description, and shall not be understood as an indication or implication of relative importance or implicit indication of a quantity of indicated technical features. A feature limited by "first" and "second" may explicitly or implicitly include one or more features.

In embodiments of this application, "at least one" means one or more, and " a plurality of" means two or more. "At least some members" means some or all members. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in an electrical form, a mechanical form, or other forms.

The units described as separate parts may or may not be physically separate. Parts displayed as units may or may not be physical units, and may be located in one position or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An automotive propulsion system, comprising a first propulsion system and a second propulsion system, wherein
the first propulsion system comprises: a first motor (411), a first retarder, a first disconnector (413), a compressor (416), and a second disconnector (417), wherein the first disconnector (413) is disposed in the first retarder, and is configured to implement a connection or disconnection between the first motor (411) and the first retarder, and the second disconnector (417) is disposed between the first retarder and the compressor (416), and is configured to implement a connection or disconnection between the first motor (411) and the compressor (416); and
the second propulsion system comprises: a second motor (421) and a second retarder, wherein the second motor (413) is connected to the second retarder,
**characterized in that**
the first propulsion system is a front-drive system and the second propulsion system is a rear-drive system, or the first propulsion system is a rear-drive system and the second propulsion system is a front-drive system
wherein the first retarder comprises a third transmission member (4121) and a fourth transmission member (4122), wherein the fourth transmission member (4122) is connected to the first motor (411) by using the third transmission member (4121), and the first disconnector (413) is disposed between the third transmission member (4121) and the fourth transmission member (4122),
wherein the second disconnector (417) is disposed between the third transmission member (4121) and the compressor (416).

2. The automotive propulsion system according to claim 1,
wherein the second propulsion system further comprises a third disconnector (423), configured to implement a connection or disconnection between the second motor (421) and the second retarder, wherein the third disconnector (423) is disposed between the second motor (421) and the second retarder, or in the second retarder.

3. The automotive propulsion system according to claim 2,
wherein the third disconnector (423) is disposed between the second motor (421) and the second retarder; and
the second retarder comprises a first transmission member (4221), wherein the first transmission member (4221) is connected to the second motor (421), and the third disconnector (423) is disposed between the first transmission member (4221) and the second motor (421).

4. The automotive propulsion system according to claim 2,
wherein the third disconnector (423) is disposed in the second retarder, and
the second retarder comprises a first transmission member (4221) and a second transmission member (4222), wherein the second transmission member (4222) is connected to the second motor (421) by using the first transmission member (4221), and the third disconnector (423) is disposed between the first transmission member (4221) and the second transmission member (4222).

5. The automotive propulsion system according to claim 2,
wherein the third disconnector (423) is disposed in the second retarder, and
the second retarder comprises a first differential (4223), wherein the first differential (4223) is connected to the second motor (421), and the third disconnector (423) is disposed on the first differential (4223).

6. The automotive propulsion system according to any one of claims 1 to 5, wherein the first retarder comprises a second differential (4123), wherein the second differential (4123) is connected to the first motor (411), and the first disconnector (413) is disposed on the second differential (4123).

7. The automotive propulsion system according to any one of claims 2 to 6,
wherein the automotive propulsion system further comprises a controller, wherein the controller is configured to control the automotive propulsion system to execute a first propulsion mode, a second propulsion mode, or a third propulsion mode, wherein
the first propulsion mode: the first motor (411) is in a working state, the first disconnector (413) connects the first motor (411) to the first retarder, torque of the first motor (411) is transmitted by using the first retarder, the second motor (421) is in the working state, the third disconnector (423) connects the second motor (421) to the second retarder, and torque of the second motor (421) is transmitted by using the second retarder;
the second propulsion mode: the first motor (411) is in the working state, the first disconnector (413) connects the first motor (411) to the first retarder, torque of the first motor (411) is transmitted by using the first retarder, the second motor (421) is in a non-working state, and the third disconnector (423) disconnects the second motor (421) from the second retarder; and
the third propulsion mode: the first motor (411) is in the non-working state, the first disconnector (413) disconnects the first motor (411) from the first retarder, the second motor (421) is in the working state, the third disconnector (423) connects the second motor (421) to the second retarder, and torque of the second motor (421) is transmitted by using the second retarder.

8. The automotive propulsion system according to any one of claims 1 to 4 or 6,
wherein the second propulsion system further comprises a third motor (431) and a third retarder, wherein the third motor (431) is connected to the third retarder.

9. The automotive propulsion system according to claim 8,
wherein the second propulsion system further comprises a fourth disconnector (433), configured to implement a connection or disconnection between the third motor (431) and the third retarder, wherein the fourth disconnector (433) is disposed between the third motor (431) and the third retarder, or in the third retarder.

10. The automotive propulsion system according to claim 9,
wherein the automotive propulsion system further comprises a controller, wherein the controller is configured to control the automotive propulsion system to execute a first propulsion mode, a second propulsion mode, or a third propulsion mode, wherein
the first propulsion mode: the first motor (411) is in a working state, the first disconnector (413) connects the first motor (411) to the first retarder, torque of the first motor (411) is transmitted by using the first retarder, the second motor (421) is in the working state, the third disconnector (423) connects the second motor (421) to the second retarder, torque of the second motor (421) is transmitted by using the second retarder, the third motor (431) is in the working state, the fourth disconnector (433) connects the third motor (431) to the third retarder, and torque of the third motor (431) is transmitted by using the third retarder;
the second propulsion mode: the first motor (411) is in the working state, the first disconnector (413) connects the first motor (411) to the first retarder, torque of the first motor (411) is transmitted by using the first retarder, the second motor (421) is in a non-working state, the third disconnector (423) disconnects the second motor (421) from the second retarder, the third motor (431) is in the non-working state, and the fourth disconnector (433) disconnects the third motor (431) from the third retarder; and
the third propulsion mode: the first motor (411) is in the non-working state, the first disconnector (413) disconnects the first motor (411) from the first retarder, the second motor (421) is in the working state, the third disconnector (423) connects the second motor (421) to the second retarder, torque of the second motor (421) is transmitted by using the second retarder, the third motor (431) is in the working state, the fourth disconnector (433) connects the third motor (431) to the third retarder, and torque of the third motor (431) is transmitted by using the third retarder.

11. The automotive propulsion system according to any one of claims 1 to 10,
wherein the automotive propulsion system further comprises the controller, wherein the controller is configured to control starting of the first motor (411) and closing of the second disconnector (417), so that the torque of the first motor (411) is transmitted to the compressor (416), or the controller is configured to control opening of the second disconnector (417).

## Patentansprüche

1. Kraftfahrzeugantriebssystem, umfassend ein erstes Antriebssystem und ein zweites Antriebssystem, wobei
das erste Antriebssystem umfasst: einen ersten Motor (411), einen ersten Retarder, einen ersten Trennschalter (413), einen Kompressor (416) und einen zweiten Trennschalter (417), wobei der erste Trennschalter (413) im ersten Retarder angeordnet und zum Herstellen oder Trennen einer Verbindung zwischen dem ersten Motor (411) und dem ersten Retarder konfiguriert ist und der zweite Trennschalter (417) zwischen dem ersten Retarder und dem Kompressor (416) angeordnet und zum Herstellen oder Trennen einer Verbindung zwischen dem ersten Motor (411) und dem Kompressor (416) konfiguriert ist; und
das zweite Antriebssystem umfasst: einen zweiten Motor (421) und einen zweiten Retarder, wobei der zweite Motor (413) mit dem zweiten Retarder verbunden ist,
**dadurch gekennzeichnet, dass**
das erste Antriebssystem ein Frontantriebssystem und das zweite Antriebssystem ein Heckantriebssystem ist, oder das erste Antriebssystem ein Heckantriebssystem und das zweite Antriebssystem ein Frontantriebssystem ist,
wobei der erste Retarder ein drittes Übertragungselement (4121) und ein viertes Übertragungselement (4122) umfasst,
wobei das vierte Übertragungselement (4122) unter Verwendung des dritten Übertragungselements (4121) mit dem ersten Motor (411) verbunden ist, und der erste Trennschalter (413) zwischen dem dritten Übertragungselement (4121) und dem vierten Übertragungselement (4122) angeordnet ist,
wobei der zweite Trennschalter (417) zwischen dem dritten Übertragungselement (4121) und dem Kompressor (416) angeordnet ist.

2. Kraftfahrzeugantriebssystem nach Anspruch 1,
wobei das zweite Antriebssystem ferner einen dritten Trennschalter (423) umfasst, der zum Herstellen oder Trennen einer Verbindung zwischen dem zweiten Motor (421) und dem zweiten Retarder konfiguriert ist, wobei der dritte Trennschalter (423) zwischen dem zweiten Motor (421) und im zweiten Retarder oder im zweiten Retarder angeordnet ist.

3. Kraftfahrzeugantriebssystem nach Anspruch 2,
wobei der dritte Trennschalter (423) zwischen dem zweiten Motor (421) und dem zweiten Retarder angeordnet ist; Und
der zweite Retarder ein erstes Übertragungselement (4221) umfasst, wobei das erste Übertragungselement (4221) mit dem zweiten Motor (421) verbunden ist und der dritte Trennschalter (423) zwischen dem ersten Übertragungselement (4221) und dem zweiten Motor (421) angeordnet ist.

4. Kraftfahrzeugantriebssystem nach Anspruch 2,
wobei der dritte Trennschalter (423) im zweiten Retarder angeordnet ist, und
der zweite Retarder ein erstes Übertragungselement (4221) und ein zweites Übertragungselement (4222) umfasst, wobei das zweite Übertragungselement (4222) unter Verwendung des ersten Übertragungselements (4221) mit dem zweiten Motor (421) verbunden ist und der dritte Trennschalter (423) zwischen dem ersten Übertragungselement (4221) und dem zweiten Übertragungselement (4222) angeordnet ist.

5. Kraftfahrzeugantriebssystem nach Anspruch 2,
wobei der dritte Trennschalter (423) im zweiten Retarder angeordnet ist, und
der zweite Retarder ein erstes Differential (4223) umfasst, wobei das erste Differential (4223) mit dem zweiten Motor (421) verbunden ist und der dritte Trennschalter (423) an dem ersten Differential (4223) angeordnet ist.

6. Kraftfahrzeugantriebssystem nach einem der Ansprüche 1 bis 5, wobei der erste Retarder ein zweites Differential (4123) umfasst, wobei das zweite Differential (4123) mit dem ersten Motor (411) verbunden ist und der erste Trennschalter ( 413) an dem zweiten Differential (4123) angeordnet ist.

7. Kraftfahrzeugantriebssystem nach einem der Ansprüche 2 bis 6,
wobei das Kraftfahrzeugantriebssystem ferner eine Steuerung umfasst, wobei die Steuerung so zum Steuern des Kraftfahrzeugantriebssystems konfiguriert ist, dass dieses einen ersten Antriebsmodus, einen zweiten Antriebsmodus oder einen dritten Antriebsmodus ausführt, wobei
der erste Antriebsmodus: der erste Motor (411) ist in einem Arbeitszustand, der erste Trennschalter (413) verbindet den ersten Motor (411) mit dem ersten Retarder, das Drehmoment des ersten Motors (411) wird unter Verwendung des ersten Retarders übertragen, der zweite Motor (421) befindet sich in dem Arbeitszustand, der dritte Trennschalter (423) verbindet den zweiten Motor (421) mit dem zweiten Retarder und das Drehmoment des zweiten Motors (421) wird unter Verwendung des zweiten Retarders übertragen;
der zweite Antriebsmodus: der erste Motor (411) ist im Arbeitszustand, der erste Trennschalter (413) verbindet den ersten Motor (411) mit dem ersten Retarder, das Drehmoment des ersten Motors (411) wird unter Verwendung des ersten Retarders übertragen, der zweite Motor (421) befindet sich in einem Nichtarbeitszustand und der dritte Trennschalter (423) trennt den zweiten Motor (421) von dem zweiten Retarder; und
der dritte Antriebsmodus: der erste Motor (411) ist im Nichtarbeitszustand, der erste Trennschalter (413) trennt den ersten Motor (411) von dem ersten Retarder, der zweite Motor (421) befindet sich im Arbeitszustand, der dritte Trennschalter (423) verbindet den zweiten Motor (421) mit dem zweiten Retarder und das Drehmoment des zweiten Motors (421) wird unter Verwendung des zweiten Retarders übertragen.

8. Kraftfahrzeugantriebssystem nach einem der Ansprüche 1 bis 4 oder 6,
wobei das zweite Antriebssystem ferner einen dritten Motor (431) und einen dritten Retarder umfasst, wobei der dritte Motor (431) mit dem dritten Retarder verbunden ist.

9. Kraftfahrzeugantriebssystem nach Anspruch 8,
wobei das zweite Antriebssystem ferner einen vierten Trennschalter (433) umfasst, der zum Herstellen oder Trennen einer Verbindung zwischen dem dritten Motor (431) und dem dritten Retarder konfiguriert ist, wobei der vierte Trennschalter (433) zwischen dem dritten Motor (431) und dem dritten Retarder oder in dem dritten Retarder angeordnet ist.

10. Kraftfahrzeugantriebssystem nach Anspruch 9,
wobei das Kraftfahrzeugantriebssystem ferner eine Steuerung umfasst, wobei die Steuerung so zum Steuern des Kraftfahrzeugantriebssystems konfiguriert ist, dass dieses einen ersten Antriebsmodus, einen zweiten Antriebsmodus oder einen dritten Antriebsmodus ausführt, wobei
der erste Antriebsmodus: der erste Motor (411) ist in einem Arbeitszustand, der erste Trennschalter (413) verbindet den ersten Motor (411) mit dem ersten Retarder, das Drehmoment des ersten Motors (411) wird unter Verwendung des ersten Retarders übertragen, der zweite Motor (421) ist in dem Arbeitszustand,
der dritte Trennschalter (423) verbindet den zweiten Motor (421) mit dem zweiten Retarder, das Drehmoment des zweiten Motors (421) wird unter Verwendung des zweiten Retarders übertragen, der dritte Motor (431) ist im Arbeitszustand, der vierte Trennschalter (433) verbindet den dritten Motor (431) mit dem dritten Retarder und das Drehmoment des dritten Motors (431) wird unter Verwendung des dritten Retarders übertragen;
der zweite Antriebsmodus: der erste Motor (411) ist im Arbeitszustand, der erste Trennschalter (413) verbindet den ersten Motor (411) mit dem ersten Retarder, das Drehmoment des ersten Motors (411) wird unter Verwendung des ersten Retarders übertragen, der zweite Motor (421) ist in einem Nichtarbeitszustand, der dritte Trennschalter (423) trennt den zweiten Motor (421) von dem zweiten Retarder, der dritte Motor (431) befindet ist im Nichtarbeitszustand und der vierte Trennschalter (433) trennt den dritten Motor (431) von dem dritten Retarder; und
der dritte Antriebsmodus: der erste Motor (411) ist im Nichtarbeitszustand, der erste Trennschalter (413) trennt den ersten Motor (411) von dem ersten Retarder, der zweite Motor (421) befindet sich im Arbeitszustand, der dritte Trennschalter (423) verbindet den zweiten Motor (421) mit dem zweiten Retarder, das Drehmoment des zweiten Motors (421) wird unter Verwendung des zweiten Retarders übertragen, der dritte Motor (431) ist im Arbeitszustand, der vierte Trennschalter (433) verbindet den dritten Motor (431) mit dem dritten Retarder und das Drehmoment des dritten Motors (431) wird unter Verwendung des dritten Retarders übertragen.

11. Kraftfahrzeugantriebssystem nach einem der Ansprüche 1 bis 10,
wobei das Kraftfahrzeugantriebssystem ferner die Steuerung umfasst, wobei die Steuerung so zum Steuern des Startens des ersten Motors (411) und des Schließens des zweiten Trennschalters (417) konfiguriert ist, dass das Drehmoment des ersten Motors (411) auf den Kompressor (416) übertragen wird, oder die Steuerung zum Steuern des Öffnens des zweiten Trennschalters (417) konfiguriert ist.

## Revendications

1. Système de propulsion automobile, comprenant un premier système de propulsion et un second système de propulsion, dans lequel
le premier système de propulsion comprend : un premier moteur (411), un premier ralentisseur, un premier sectionneur (413), un compresseur (416) et un deuxième sectionneur (417), dans lequel le premier sectionneur (413) est disposé dans le premier ralentisseur, et est configuré pour mettre en oeuvre une connexion ou déconnexion entre le premier moteur (411) et le premier ralentisseur, et le deuxième sectionneur (417) est disposé entre le premier ralentisseur et le compresseur (416), et est configuré pour mettre en oeuvre une connexion ou déconnexion entre le premier moteur (411) et le compresseur (416) ; et
le second système de propulsion comprend : un deuxième moteur (421) et un deuxième ralentisseur, dans lequel le deuxième moteur (413) est connecté au deuxième ralentisseur,
**caractérisé en ce que**
le premier système de propulsion est un système de traction avant et le second système de propulsion est un système de traction arrière, ou le premier système de propulsion est un système de traction arrière et le second système de propulsion est un système de traction avant
dans lequel le premier ralentisseur comprend un troisième élément de transmission (4121) et un quatrième élément de transmission (4122), dans lequel le quatrième élément de transmission (4122) est connecté au premier moteur (411) en utilisant le troisième élément de transmission (4121), et le premier sectionneur (413) est disposé entre le troisième élément de transmission (4121) et le quatrième élément de transmission (4122),
dans lequel le deuxième sectionneur (417) est disposé entre le troisième élément de transmission (4121) et le compresseur (416) .

2. Système de propulsion automobile selon la revendication 1,
dans lequel le second système de propulsion comprend en outre un troisième sectionneur (423), configuré pour mettre en oeuvre une connexion ou déconnexion entre le deuxième moteur (421) et le deuxième ralentisseur, dans lequel le troisième sectionneur (423) est disposé entre le deuxième moteur (421) et le deuxième ralentisseur, ou dans le deuxième ralentisseur.

3. Système de propulsion automobile selon la revendication 2,
dans lequel le troisième sectionneur (423) est disposé entre le deuxième moteur (421) et le deuxième ralentisseur ; et
le deuxième ralentisseur comprend un premier élément de transmission (4221), dans lequel le premier élément de transmission (4221) est connecté au deuxième moteur (421), et le troisième sectionneur (423) est disposé entre le premier élément de transmission (4221) et le deuxième moteur (421).

4. Système de propulsion automobile selon la revendication 2,
dans lequel le troisième sectionneur (423) est disposé dans le deuxième ralentisseur, et
le deuxième ralentisseur comprend un premier élément de transmission (4221) et un deuxième élément de transmission (4222), dans lequel le deuxième élément de transmission (4222) est connecté au deuxième moteur (421) en utilisant le premier élément de transmission (4221), et le troisième sectionneur (423) est disposé entre le premier élément de transmission (4221) et le deuxième élément de transmission (4222).

5. Système de propulsion automobile selon la revendication 2,
dans lequel le troisième sectionneur (423) est disposé dans le deuxième ralentisseur, et
le deuxième ralentisseur comprend un premier différentiel (4223), dans lequel le premier différentiel (4223) est connecté au deuxième moteur (421), et le troisième sectionneur (423) est disposé sur le premier différentiel (4223).

6. Système de propulsion automobile selon l'une quelconque des revendications 1 à 5, dans lequel le premier ralentisseur comprend un second différentiel (4123), dans lequel le second différentiel (4123) est connecté au premier moteur (411), et le premier sectionneur (413) est disposé sur le second différentiel (4123).

7. Système de propulsion automobile selon l'une quelconque des revendications 2 à 6,
dans lequel le système de propulsion automobile comprend en outre un dispositif de commande, dans lequel le dispositif de commande est configuré pour commander le système de propulsion automobile afin d'exécuter un premier mode de propulsion, un deuxième mode de propulsion ou un troisième mode de propulsion, dans lequel
le premier mode de propulsion : le premier moteur (411) est en état de fonctionnement, le premier sectionneur (413) connecte le premier moteur (411) au premier ralentisseur, le couple du premier moteur (411) est transmis en utilisant le premier ralentisseur, le deuxième moteur (421) est en état de fonctionnement, le troisième sectionneur (423) connecte le deuxième moteur (421) au deuxième ralentisseur, et le couple du deuxième moteur (421) est transmis en utilisant le deuxième ralentisseur ;
le deuxième mode de propulsion : le premier moteur (411) est en état de fonctionnement, le premier sectionneur (413) connecte le premier moteur (411) au premier ralentisseur, le couple du premier moteur (411) est transmis en utilisant le premier ralentisseur, le deuxième moteur (421) est en état de fonctionnement, et le troisième sectionneur (423) déconnecte le deuxième moteur (421) du deuxième ralentisseur ; et
le troisième mode de propulsion : le premier moteur (411) est en état de non fonctionnement, le premier sectionneur (413) déconnecte le premier moteur (411) du premier ralentisseur, le deuxième moteur (421) est en état de fonctionnement, le troisième sectionneur (423) connecte le deuxième moteur (421) au deuxième ralentisseur, et le couple du deuxième moteur (421) est transmis en utilisant le deuxième ralentisseur.

8. Système de propulsion automobile selon l'une quelconque des revendications 1 à 4 ou 6,
dans lequel le second système de propulsion comprend en outre un troisième moteur (431) et un troisième ralentisseur, dans lequel le troisième moteur (431) est connecté au troisième ralentisseur.

9. Système de propulsion automobile selon la revendication 8,
dans lequel le second système de propulsion comprend en outre un quatrième sectionneur (433), configuré pour mettre en oeuvre une connexion ou déconnexion entre le troisième moteur (431) et le troisième ralentisseur, dans lequel le quatrième sectionneur (433) est disposé entre le troisième moteur (431) et le troisième ralentisseur, ou dans le troisième ralentisseur.

10. Système de propulsion automobile selon la revendication 9,
dans lequel le système de propulsion automobile comprend en outre un dispositif de commande, dans lequel le dispositif de commande est configuré pour commander le système de propulsion automobile afin d'exécuter un premier mode de propulsion, un deuxième mode de propulsion ou un troisième mode de propulsion, dans lequel
le premier mode de propulsion : le premier moteur (411) est en état de fonctionnement, le premier sectionneur (413) connecte le premier moteur (411) au premier ralentisseur, le couple du premier moteur (411) est transmis en utilisant le premier ralentisseur, le deuxième moteur (421) est en état de fonctionnement, le troisième sectionneur (423) connecte le deuxième moteur (421) au deuxième ralentisseur, le couple du deuxième moteur (421) est transmis en utilisant le deuxième ralentisseur, le troisième moteur (431) est en état de fonctionnement, le quatrième sectionneur (433) connecte le troisième moteur (431) au troisième ralentisseur, et le couple du troisième moteur (431) est transmis en utilisant le troisième ralentisseur ;
le deuxième mode de propulsion : le premier moteur (411) est en état de fonctionnement, le premier sectionneur (413) connecte le premier moteur (411) au premier ralentisseur, le couple du premier moteur (411) est transmis en utilisant le premier ralentisseur, le deuxième moteur (421) est en état de non fonctionnement, le troisième sectionneur (423) déconnecte le deuxième moteur (421) du deuxième ralentisseur, le troisième moteur (431) est en état de non fonctionnement, et le quatrième sectionneur (433) déconnecte le troisième moteur (431) du troisième ralentisseur ; et
le troisième mode de propulsion : le premier moteur (411) est en état de non fonctionnement, le premier sectionneur (413) déconnecte le premier moteur (411) du premier ralentisseur, le deuxième moteur (421) est en état de fonctionnement, le troisième sectionneur (423) connecte le deuxième moteur (421) au deuxième ralentisseur, le couple du deuxième moteur (421) est transmis en utilisant le deuxième ralentisseur, le troisième moteur (431) est en état de fonctionnement, le quatrième sectionneur (433) connecte le troisième moteur (431) au troisième ralentisseur, et le couple du troisième moteur (431) est transmis en utilisant le troisième ralentisseur.

11. Système de propulsion automobile selon l'une quelconque des revendications 1 à 10,
dans lequel le système de propulsion automobile comprend en outre le dispositif de commande, dans lequel le dispositif de commande est configuré pour commander le démarrage du premier moteur (411) et la fermeture du deuxième sectionneur (417), de sorte que le couple du premier moteur (411) est transmis au compresseur (416), ou le dispositif de commande est configuré pour commander l'ouverture du deuxième sectionneur (417).
